# EUROPEAN PATENT SPECIFICATION

(11) **EP 3 009 335 B1**
(45) Date of publication and mention of the grant of the patent: **19.09.2018**
(21) Application number: 14810536.4
(22) Date of filing: 06.06.2014
(51) Int. Cl.: B62J 23/00, B32B 7/02, B32B 27/08, B32B 3/02, B32B 1/00, B32B 27/32, B32B 27/34

(54) **EXTERIOR COVER FOR STRADDLED VEHICLES**
AUSSENVERKLEIDUNG FÜR GRÄTSCHSITZFAHRZEUGE
HABILLAGE EXTÉRIEUR POUR VÉHICULES À ENFOURCHER

(30) Priority: 10.06.2013 JP 2013122172
(43) Date of publication of application: 20.04.2016
(73) Proprietor: Yamaha Hatsudoki Kabushiki Kaisha, Iwata-shi, Shizuoka 438-8501 (JP)
(72) Inventor: OISHI, Takeshi, Iwata-shi Shizuoka 438-8501 (JP); KITSUNAI, Toru, Iwata-shi Shizuoka 438-8501 (JP)
(74) Representative: Stöckeler, Ferdinand
(86) International application number: PCT/JP2014/065162
(87) International publication number: WO 2014/199930

(56) References cited:
- JP-A- H06 191 455
- JP-A- H06 191 455
- JP-A- 2000 016 191
- JP-A- 2001 009 984
- JP-A- 2009 161 027
- JP-A- 2013 010 386
- US-A1- 2013 015 008

## Description

### Technical Field

The present invention relates to an exterior cover for a straddled vehicle.

### Background Art

A straddled vehicle includes an exterior cover supported by a vehicle body frame. The rigidity of the straddled vehicle is basically ensured by the vehicle body frame, and the contribution of the exterior cover to the rigidity is small. For this reason, an exterior cover for a straddled vehicle is typically formed by molding acrylonitrile butadiene styrene (ABS). Its outer surface is painted, and a sticker indicating the name of the vehicle or the like is attached onto the painted surface. An exterior cover for such a straddled vehicle has to be structured so that bending deformation and torsional deformation occur. Such deformation is needed to reduce damage to the exterior cover when a rider riding the vehicle, a baggage, or the like is lightly brought into contact with the exterior cover. In addition, weight reduction is required for straddled vehicles. For this reason, an exterior cover for a straddled vehicle is made of resin to promote weight reduction while ensuring toughness. However, to prevent excessive deformation by contact, it is also required to enhance the rigidity.

In general, if the thickness of an exterior cover for a straddled vehicle is increased to ensure the rigidity, the material cost and the weight of the exterior cover are increased, though the cover is made of resin. If one or more reinforcing ribs are provided on a reverse surface of the exterior cover, the shape of the cover is complicated. Further, if this is the case, the weight is increased, though the increase in weight is smaller than that in the case where the thickness is increased. In view of the above, Patent Literature 1 proposes a cover structure for a motorcycle as follows: the motorcycle includes rear side covers and under side covers each located below the corresponding rear side cover; each under side cover is provided with a rearward extension portion molded integrally with the under side cover; and the rearward extension portion faces the reverse face of the corresponding rear side cover from inside. In the motorcycle of Patent Literature 1, the rearward extension portion molded integrally with each under side cover is joined to a lower edge portion of the corresponding rear side cover, to ensure the rigidity of the rear side cover.

### Citation List

### Patent Literature

JP H06 191455 A discloses a side cover for a motorcycle, which has a surface pattern identical to the skin of a seat. The surface pattern is transferred to the inner surface of a molding die, a base main body in a hard plate shape is positioned so as to be set in the molding die while being separated from the surface of the surface pattern, so that a surface resin layer integrated with the base main body is thereby formed in a space by filling resin in a space between the surface of the surface pattern and the base main body.

US 2013/015008 A1 discloses an exterior cover for a saddle-type vehicle, which is formed by integrally uniting a plurality of resin members including a front cover section and a rear cover section. The cover is insert molded to form an overlapping part where the front cover section and the rear cover section overlap with each other. The front cover section has an external-appearance-surface side at the overlapping part. The rear cover section has a non-external-appearance-surface side, which overlaps with the front cover section at the overlapping part. The rear cover section has a rib extending on the non-external-appearance-surface side.

Patent Literature 1: Japanese Unexamined Patent Publication No. 2012-232627

### Summary of Invention

### Technical Problem

The exterior cover structure for a straddled vehicle described in Patent Literature 1 is based on the following technical idea: the exterior cover structure is constituted by a plurality of exterior covers; and the exterior covers are joined to each other with the covers partially overlapping each other, thereby to promote weight reduction while ensuring the toughness and the rigidity of the exterior cover structure made of resin. However, even in the technique based on the above technical idea, and even though the cover structure is made of resin, there is room for improvement in weight reduction because the exterior covers partially overlap each other.

The present invention has been made in view of the above. An object of the present invention is to provide an exterior cover for a straddled vehicle, which enables promotion of further weight reduction while ensuring toughness and rigidity.

### Solution to Problem

In the generally-proposed technical ideas, the toughness and the rigidity are ensured by increasing the thickness, by providing a rib for reinforcement, or by joining exterior covers to each other with the covers overlapping each other. The present teaching does not rely on such generally-proposed technical ideas. The present teaching is based on the following technical idea: the exterior cover for a straddled vehicle is structured to include an integral layered resin portion including a first resin layer and a second resin layer; and ingenuity is further exercised in terms of the properties, such as material and strength, and the shape of the first and second resin layers, thereby to promote further weight reduction while ensuring the toughness and the rigidity of the exterior cover. In other words, the present teaching is based on the technical idea stating that: resin layers having different properties are layered; and in addition to this, ingenuity is further exercised in terms of the distribution and the shape of the layered resin layers, to promote further weight reduction while ensuring the toughness and the rigidity of the exterior cover for a straddled vehicle.

According to an embodiment, an exterior cover for a straddled vehicle, in which a seat is supported by a vehicle body frame, includes an exterior surface. The exterior cover is configured to be supported by the vehicle body frame. The exterior cover includes an integral layered resin portion formed of a first resin layer and a second resin layer layered on and integrally molded with each other. The first resin layer made of resin with a crystalline structure is thinner than the second resin layer made of resin having a Young's modulus lower than that of the first resin layer. In a first cross-section of the exterior cover cut in a first direction crossing the exterior surface, the integral layered resin portion formed of the first resin layer and the second resin layer which are integrally molded into a layered structure forms: a cover main body on which the exterior surface is formed; and two first bending portions respectively formed into bent shapes at both end portions of the cover main body.

With this structure, in the first cross-section of the exterior cover which crosses the exterior surface, the integral layered resin portion forms: the cover main body on which the exterior surface is formed; and the two first bending portions at both end portions of the cover main body. The integral layered resin portion is formed of the first resin layer and the second resin layer which are integrally molded into the layered structure.

The first resin layer has a crystalline structure, and has a Young's modulus higher than that of the second resin layer. Because of this, it is relatively easier to enhance the rigidity in the first resin layer than in the second resin layer. However, if the thickness of the first resin layer is too large, it is difficult to ensure the toughness required for the exterior cover. Thus, in this embodiment, the first resin layer is made thinner than the second resin layer, to ensure the rigidity and the toughness. Because the Young's modulus of the second resin layer is lower than that of the first resin layer, it is easier to ensure the toughness in the second resin layer. However, it is difficult to ensure the rigidity in the second resin layer. Thus, the second resin layer is made thicker than the first resin layer, to ensure the rigidity and the toughness. Further, the second resin layer and the first resin layer are integrally molded. Thus, by virtue of the property of the first resin layer, in which enhancement of the rigidity is easier, the rigidity required for the second resin layer is reduced. This makes it possible to decrease the thickness of the second resin layer while ensuring the rigidity and the toughness. Moreover, the exterior cover includes the integral layered resin portion. The integral layered resin portion is formed of the first resin layer and the second resin layer which are layered on and integrally molded with each other; and the first resin layer made of resin with a crystalline structure is thinner than the second resin layer made of resin having a Young's modulus lower than that of the first resin layer. This configuration enables weight reduction of the exterior cover while ensuring the rigidity and the toughness.

Further, according to the present teaching, in the first cross-section of the exterior cover which crosses the exterior surface, the integral layered resin portion forms: the cover main body on which the exterior surface is formed; and the two first bending portions respectively formed into bent shapes at both end portions of the cover main body. The integral layered resin portion is formed of the first resin layer and the second resin layer which are integrally molded into the layered structure. Thus, the rigidity of the exterior cover against bending deformation and torsional deformation is further enhanced by exercising ingenuity in terms of the shape of the integral layered resin portion including the first resin layer in which enhancement of the rigidity is easier. As compared to the case where only the cover main body is formed by the integral layered resin portion formed of the first resin layer and the second resin layer which are integrally molded into the layered structure, for example, it is possible to achieve greater rigidity while ensuring the toughness.

Thus, while the rigidity and the toughness required for the exterior cover are ensured, further weight reduction is promoted by reducing the thicknesses of the first resin layer and the second resin layer.

In the exterior cover according to the present teaching, it is preferable that, in the first cross-section of the exterior cover, the integral layered resin portion formed of the first resin layer and the second resin layer which are integrally molded into the layered structure forms two first edge wall portions which are respectively in continuity with both end portions of the cover main body via the respective first bending portions, and the first edge wall portions extend from both respective end portions of the cover main body in one direction along the first direction crossing the exterior surface.

With this structure, in the first cross-section of the exterior cover which crosses the exterior surface, the two first edge wall portions extend from both respective end portions of the cover main body in the one direction along the first direction. The two first edge wall portions are formed by the integral layered resin portion formed of the first resin layer and the second resin layer which are integrally molded into the layered structure. The rigidity of the exterior cover against bending deformation and torsional deformation is further enhanced by exercising ingenuity in terms of the shape of the integral layered resin portion including the first resin layer in which enhancement of the rigidity is easier. Suppose there is a case where one of the two first edge wall portions extends in one direction along the first direction and the other of the two first edge wall portions extends in the direction opposite to the one direction along the first direction, for example. As compared to this case, the rigidity of the exterior cover is improved with respect to the vertical direction, bending direction, and torsional direction of the exterior surface, while the toughness is ensured.

Thus, while the rigidity and the toughness required for the exterior cover are ensured, further weight reduction is promoted by reducing the thicknesses of the first resin layer and the second resin layer.

In the exterior cover according to the present teaching, it is preferable that, in the first cross-section of the exterior cover, the cover main body formed by the integral layered resin portion formed of the first resin layer and the second resin layer which are integrally molded into the layered structure is formed into a curved shape bulging or recessed relative to a virtual straight line connecting the two first bending portions.

With this structure, in the first cross-section of the exterior cover which crosses the exterior surface, the cover main body is formed into a bulging curved shape or a recessed curved shape. The cover main body is formed by the integral layered resin portion. The integral layered resin portion is formed of the first resin layer and the second resin layer which are integrally molded into the layered structure. The rigidity of the exterior cover against bending deformation and torsional deformation is further enhanced by exercising ingenuity in terms of the shape of the integral layered resin portion including the first resin layer in which enhancement of the rigidity is easier. As compared to the case where the cover main body is substantially flat, for example, the rigidity of the exterior cover is improved with respect to the vertical direction, bending direction, and torsional direction of the exterior surface, while the toughness is ensured.

Thus, while the rigidity and the toughness required for the exterior cover are ensured, further weight reduction is promoted by reducing the thicknesses of the first resin layer and the second resin layer.

In the exterior cover according to the present teaching, it is preferable that, in the first cross-section of the exterior cover, a width of the cover main body formed by the integral layered resin portion formed of the first resin layer and the second resin layer which are integrally molded into the layered structure is longer than a length of each of the two first edge wall portions which are respectively in continuity with both end portions of the cover main body via the respective first bending portions.

With this structure, in the first cross-section of the exterior cover which crosses the exterior surface, the width of the cover main body is longer than the length of each of the two first edge wall portions which are respectively in continuity with both end portions of the cover main body via the respective first bending portion. The cover main body is formed by the integral layered resin portion. The integral layered resin portion is formed of the first resin layer and the second resin layer which are integrally molded into the layered structure. According to the above embodiment, the cover main body is formed into the curved shape in the first cross-section of the exterior cover. Therefore, as compared to the case where the cover main body is substantially flat, for example, it is possible to increase the width of the cover main body while maintaining the rigidity of the cover main body. The rigidity of the exterior cover against bending deformation and torsional deformation is further enhanced by exercising ingenuity in terms of the shape of the integral layered resin portion including the first resin layer in which enhancement of the rigidity is easier. As compared to the case where the cover main body is substantially flat, for example, it is possible to reduce the thickness of the cover main body while maintaining the width and the rigidity of the cover main body, as well as ensuring the toughness.

Thus, while the rigidity and the toughness required for the exterior cover are ensured, further weight reduction is promoted by reducing the thicknesses of the first resin layer and the second resin layer.

It should be noted that, when the cover main body has the curved shape in the first cross-section of the exterior cover, the width of the cover main body in the first cross-section of the exterior cover means the distance between both end portions of the cover main body, and does not mean the length of the cover main body in the first cross-section of the exterior cover.

In the exterior cover of the present teaching, it is preferable that, in the first cross-section of the exterior cover, bending angles of the two first bending portions provided at both end portions of the cover main body formed by the integral layered resin portion formed of the first resin layer and the second resin layer which are integrally molded into the layered structure are different from each other.

The rigidity of the exterior cover depends on the size of the bending angles of the first bending portions. According to the above embodiment, in the first cross-section of the exterior cover which crosses the exterior surface, the bending angles of the two first bending portions provided at both end portions of the cover main body are different from each other. The cover main body is formed by the integral layered resin portion. The integral layered resin portion is formed of the first resin layer and the second resin layer which are integrally molded into the layered structure. As compared to the case where the bending angles of the two first bending portions are identical to each other, for example, it is easier to adjust the degree of rigidity of the exterior cover.

Thus, while the rigidity and the toughness required for the exterior cover are ensured, further weight reduction is promoted by reducing the thicknesses of the first resin layer and the second resin layer.

In the exterior cover of the present teaching, it is preferable that, in the first cross-section of the exterior cover, the integral layered resin portion formed of the first resin layer and the second resin layer which are integrally molded into the layered structure forms the two first edge wall portions which are respectively in continuity with both end portions of the cover main body via the respective first bending portions, and lengths of the two first edge wall portions are different from each other.

The longer the lengths of the first edge wall portions, the higher the rigidity of the exterior cover. According to the above embodiment, in the first cross-section of the exterior cover which crosses the exterior surface, the two first edge wall portions are formed by the integral layered resin portion formed of the first resin layer and the second resin layer which are integrally molded into the layered structure. Further, in the first cross-section of the exterior cover which crosses the exterior surface, the lengths of the two first edge wall portions are different from each other. The rigidity of the exterior cover against bending deformation and torsional deformation is further enhanced by exercising ingenuity in terms of the shape of the integral layered resin portion including the first resin layer in which enhancement of the rigidity is easier. As compared to the case where the lengths of the two first edge wall portions are identical to each other, for example, it is easier to adjust the rigidity of the exterior cover.

Thus, it is possible to decrease the lengths of the first edge wall portions to be as short as possible while ensuring the required rigidity. This leads to further weight reduction of the exterior cover.

In the exterior cover of the present teaching, it is preferable that, in a second cross-section of the exterior cover which is orthogonal to the first cross-section of the exterior cover and crosses the exterior surface, the integral layered resin portion formed of the first resin layer and the second resin layer which are integrally molded into the layered structure forms: the cover main body; and two second bending portions respectively formed into bent shapes at both end portions of the cover main body.

In this structure, the second cross-section of the exterior cover is orthogonal to the first cross-section of the exterior cover, and crosses the exterior surface. In the second cross-section of the exterior cover, the integral layered resin portion forms: the cover main body; and the two second bending portions at both end portions of the cover main body. The integral layered resin portion is formed of the first resin layer and the second resin layer which are integrally molded into the layered structure. The rigidity of the exterior cover against bending deformation and torsional deformation is further enhanced by exercising ingenuity in terms of the shape of the integral layered resin portion including the first resin layer in which enhancement of the rigidity is easier. As compared to the case where only the cover main body is formed by the integral layered resin portion in the second cross-section of the exterior cover, for example, it is easier to ensure the rigidity of the exterior cover.

Thus, while the rigidity and the toughness required for the exterior cover are ensured, further weight reduction is promoted by reducing the thicknesses of the first resin layer and the second resin layer.

In the exterior cover of the present teaching, it is preferable that: a protruding portion which is in continuity with the cover main body via a bending portion is formed between both end portions of the cover main body; and in a cross-section of the exterior cover passing through the protruding portion and crossing the exterior surface, the integral layered resin portion formed of the first resin layer and the second resin layer which are integrally molded into the layered structure forms the cover main body and at least a part of the protruding portion.

With this structure, in a cross-section of the exterior cover which crosses the exterior surface, the integral layered resin portion forms the protruding portion formed between both end portions of the cover main body. The integral layered resin portion is formed of the first resin layer and the second resin layer which are integrally molded into the layered structure. The rigidity of the exterior cover against bending deformation and torsional deformation is further enhanced by exercising ingenuity in terms of the shape of the integral layered resin portion including the first resin layer in which enhancement of the rigidity is easier. As compared to the case where no protruding portion is provided, for example, the rigidity of the exterior cover is improved, while the toughness is ensured.

Thus, while the rigidity and the toughness required for the exterior cover are ensured, further weight reduction is promoted by reducing the thicknesses of the first resin layer and the second resin layer.

It should be noted that the protruding portion of the present teaching may protrude from the exterior surface of the cover main body, or may protrude from a surface opposite to the exterior surface of the cover main body.

In the exterior cover of the present teaching, it is preferable that the protruding portion formed by the integral layered resin portion formed of the first resin layer and the second resin layer which are integrally molded into the layered structure is formed into a tubular shape.

This structure facilitates the use of the protruding portion when attaching the exterior cover to the vehicle body frame.

In the exterior cover of the present teaching, it is preferable that: a longitudinal direction of the exterior cover is orthogonal to the first cross-section of the exterior cover; and the first edge wall portions formed by the integral layered resin portion formed of the first resin layer and the second resin layer which are integrally molded into the layered structure extend in the longitudinal direction of the exterior cover.

With this structure, the first edge wall portions are formed by the integral layered resin portion formed of the first resin layer and the second resin layer which are integrally molded into the layered structure. Further, the first edge wall portions extend in the direction orthogonal to the first cross-section of the exterior cover. The rigidity of the exterior cover against bending deformation and torsional deformation is further enhanced by exercising ingenuity in terms of the shape of the integral layered resin portion including the first resin layer in which enhancement of the rigidity is easier. According to the above embodiment, weight reduction is achieved while the rigidity and the toughness of the exterior cover are ensured over a wide range along the longitudinal direction.

Thus, while the rigidity and the toughness required for the exterior cover are ensured, further weight reduction is promoted by reducing the thicknesses of the first resin layer and the second resin layer.

In the exterior cover of the present teaching, it is preferable that the second resin layer integrally molded with the first resin layer into the layered structure is made of resin with a crystalline structure, and the degree of crystallinity of the second resin layer is lower than that of the first resin layer.

With this structure, it is possible to adjust the Young's modulus by changing the degree of crystallinity. The above adjustment is easier when the first resin layer and the second resin layer integrally molded into the layered structure are made of the same type of resin. Thus, while the rigidity and the toughness required for the exterior cover are ensured, further weight reduction is promoted by reducing the thicknesses of the first resin layer and the second resin layer.

In the exterior cover of the present teaching, it is preferable that both of the first resin layer and the second resin layer integrally molded into the layered structure are made of polypropylene or polyamide.

With this structure, when the first resin layer and the second resin layer which are integrally molded into the layered structure are made of polypropylene, the cost of the exterior cover is reduced. Alternatively, when the first resin layer and the second resin layer which are integrally molded into the layered structure are made of polyamide, the heat resistance property of the exterior cover is improved.

### Brief Description of Drawings

[FIG. 1] FIG. 1 is a leftside view of a motorcycle related to an embodiment.
[FIG. 2] FIG. 2 is an obverse view of an exterior cover of a first embodiment.
[FIG. 3] FIG. 3 is a reverse view of the exterior cover of the first embodiment.
[FIG. 4] FIG. 4 is a perspective view of the exterior cover of the first embodiment.
[FIG. 5] FIG. 5 is a cross-section of the exterior cover of the first embodiment along a line V-V in FIG. 2.
[FIG. 6] FIG. 6 is a cross-section of the exterior cover of the first embodiment along a line VI-VI in FIG. 2.
[FIG. 7] FIG. 7 is a cross-section of the exterior cover of the first embodiment along a line VII-VII in FIG. 2.
[FIG. 8A] FIG. 8A is an enlarged view of a portion Villa in FIG. 7.
[FIG. 8B] FIG. 8B is a diagram corresponding to FIG. 8A, illustrating an exterior cover of a modification of the first embodiment.
[FIG. 9A] FIG. 9A is a diagram illustrating an example of how to produce the exterior cover of the first embodiment.
[FIG. 9B] FIG. 9B is a diagram illustrating the example of how to produce the exterior cover of the first embodiment.
[FIG. 10A] FIG. 10A is a diagram illustrating another example of how to produce the exterior cover of the first embodiment.
[FIG. 10B] FIG. 10B is a diagram illustrating that other example of how to produce the exterior cover of the first embodiment.
[FIG. 11] FIG. 11 is a cross-section of an exterior cover of a comparative example.
[FIG. 12A] FIG. 12A is a cross-section of an exterior cover of a second embodiment.
[FIG. 12B] FIG. 12B is a cross-section of an exterior cover of the second embodiment.
[FIG. 13] FIG. 13 is a cross-section of an exterior cover of a third embodiment.

### Description of Embodiments

### (First Embodiment)

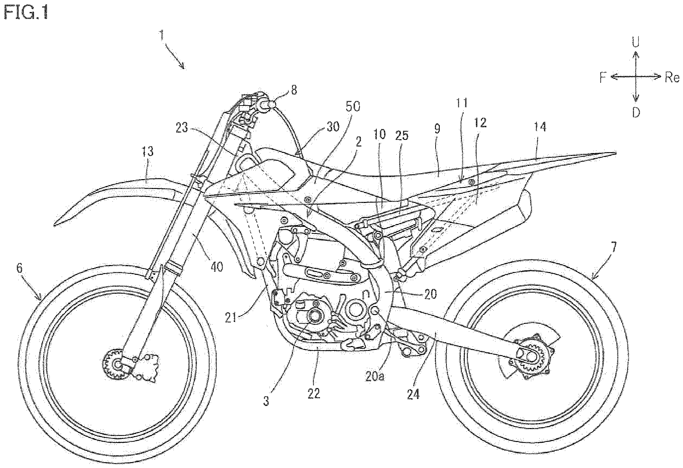

The following describes an embodiment of the present teaching, with reference to the drawings. As shown in FIG. 1, a straddled vehicle related to this embodiment is an off-road motorcycle 1 which is called a motocrosser. It should be noted that the straddled vehicle related to the present disclosure is not limited to the off-road motorcycle 1. The straddled vehicle may be any vehicle which a rider rides astride the vehicle. The straddled vehicle in the present disclosure may be any other type of two-wheeled motor vehicle, such as an on-road motorcycle, a scooter, and a moped, or may be a vehicle other than the two-wheeled motor vehicle, such as a three-wheeled vehicle, a four-wheeler or all terrain vehicle (ATV), a water scooter, and a snowmobile.

In the following description, unless otherwise specified, "up", "down", "forward (front)", "rearward (rear)", "left", and "right" respectively mean "up", "down", "forward (front)", "rearward (rear)", "left", and "right" as seen from a rider of the motorcycle 1 who is seated on a seat 9 described below. The motorcycle 1 may be inclined when driven; however, the "up" and "down" directions herein respectively correspond to the "up" and "down" directions along the vertical direction under the condition that the motorcycle 1 stops on a horizontal plane. Reference signs U, D, F, Re, L, and R in the drawings respectively represent "up", "down", "forward", "rearward", "left", and "right".

As shown in FIG. 1, the motorcycle 1 includes a vehicle body frame 2, a front wheel 6, and a rear wheel 7. An engine 3, a handlebar unit 8, the seat 9, and a fuel tank 10 are supported by the vehicle body frame 2. It should be noted that the expression "supported by the vehicle body frame" used herein covers the case where an object is directly supported by the vehicle body frame and the case where an object is indirectly supported by the vehicle body frame via another member such as a bracket.

The vehicle body frame 2 includes a pair of main frames 20, a down frame 21, a pair of bottom frames 22, a head pipe 23, a pair of rear arms 24, and a seat rail 25. The head pipe 23 is located at a front portion of the motorcycle 1. The main frames 20 extend obliquely rearward and downward from the head pipe 23. The down frame 21 is located lower than the main frames 20, and extends obliquely rearward and downward from the head pipe 23. Each bottom frame 22 connects a lower end of the down frame 21 with a lower end of the corresponding main frame 20. The seat rail 25 extends rearward from the main frames 20.

The engine 3 is located lower than the main frames 20 and rearward of the down frame 21. Rearward of the head pipe 23, there is provided an air cleaner 30. The seat 9 supported by the seat rail 25 is located rearward of the air cleaner 30 and above the main frames 20. The fuel tank 10 is located below a front portion of the seat 9.

A steering shaft (not illustrated) is inserted into the head pipe 23, and the handlebar unit 8 is connected to an upper portion of the steering shaft. In parallel with the steering shaft, a pair of front forks 40 are provided. The front wheel 6 is rotatably attached to lower ends of the front forks 40.

Pivot shafts 20a are respectively provided at rear portions of the main frames 20. The pivot shafts 20a support front end portions of the rear arms 24. The pivot shafts 20a enable the rear arms 24 to be swingable in an up/down direction relative to the main frames 20. The rear wheel 7 is rotatably attached to rear end portions of the rear arms 24.

The vehicle body frame 2 supports an exterior cover 11 which covers a part of the vehicle body frame 2. The exterior cover 11 includes: a pair of front side covers 50; a pair of rear side covers 12; a front fender 13; and a rear fender 14. Each front side cover 50 is located below the front portion of the seat 9, and is supported by upper portions of the corresponding main frame 20 and down frame 21. Each rear side cover 12 is located below a rear portion of the seat 9, and is supported by the seat rail 25. The front fender 13 is located above the front wheel 6, and is supported by the front forks 40. The rear fender 14 is located above the rear wheel 7, and is supported by the seat rail 25.

One of the front side covers 50 is located to the left of the vehicle body frame 2 and the other of the front side covers 50 is located to the right of the vehicle body frame 2. The front side covers 50 are shaped to be left-right symmetrical. Hereinafter, a detailed description will be given of the front side cover 50 located to the left of the vehicle body frame 2. In the following description, a "side cover 50" means the front side cover 50 located to the left of the vehicle body frame 2.

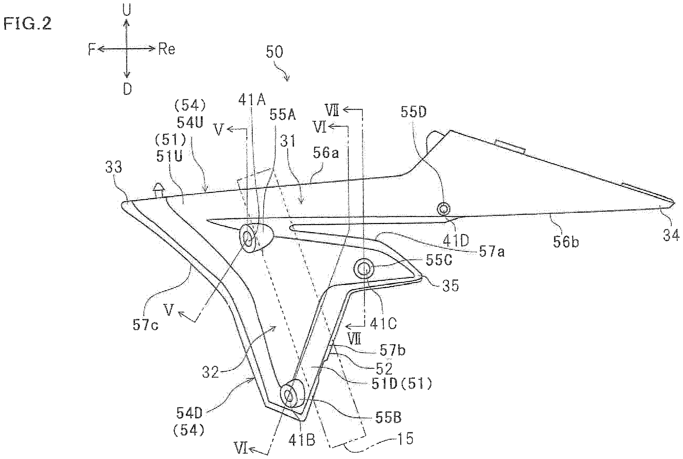

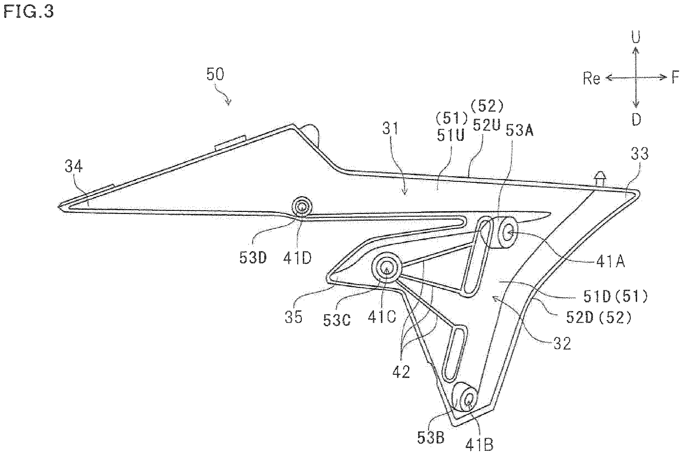

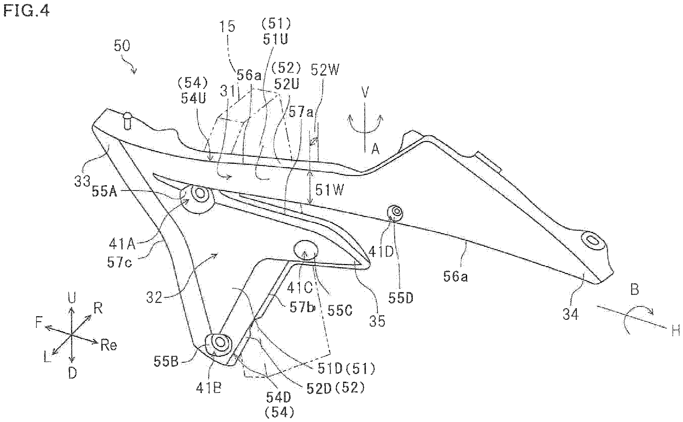

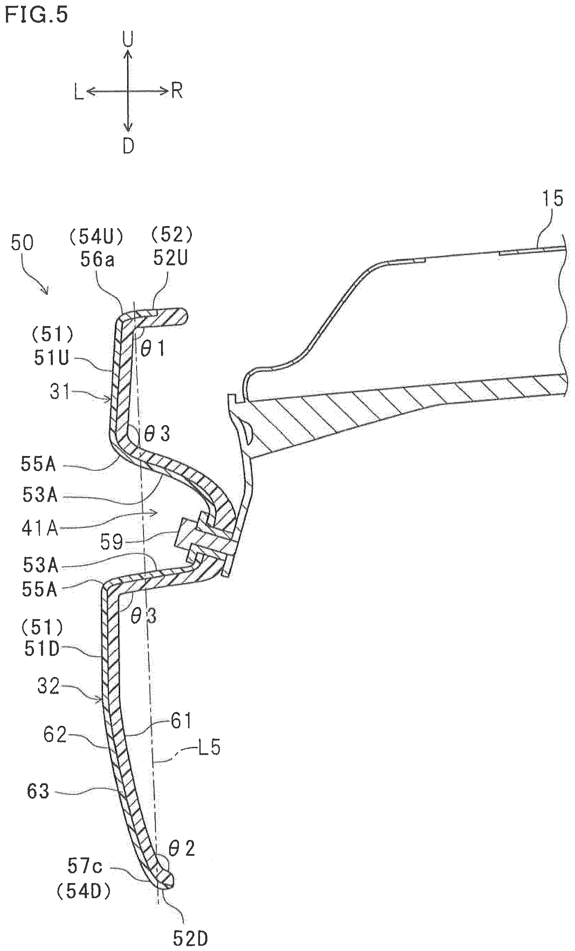

FIG. 2 is an obverse view of the side cover 50, corresponding to a side view of the side cover 50 as seen from the left side of the motorcycle 1. FIG. 3 is a reverse view of the side cover 50, corresponding to a side view of the side cover 50 as seen from the right side of the motorcycle 1. In the following description, unless otherwise specified, an "obverse" and a "reverse" respectively mean the obverse and reverse of the side cover 50. FIG. 4 is a perspective view of the side cover 50, as seen from the oblique left rear side. FIG. 5, FIG. 6, and FIG. 7 each is a cross-section of the side cover 50, crossing a forward/rearward direction of the side cover 50.

As shown in FIG. 2, the side cover 50 is constituted by an upper cover portion 31, and a lower cover portion 32 positioned below the upper cover portion 31. The upper cover portion 31 is shaped to be elongated in the forward/rearward direction. The lower cover portion 32 is formed into a substantially triangular shape. The side cover 50 is an integral member. The lower cover portion 32 is continuous with a front lower portion of the upper cover portion 31. The length of the side cover 50 in the forward/rearward direction is longer than the length of the side cover 50 in the up/down direction. Note that the length of the side cover 50 in the forward/rearward direction is equal to the length of the upper cover portion 31 in the forward/rearward direction.

As shown in FIG. 4, the side cover 50 includes an exterior surface which is visible in the situation wherein the side cover 50 is attached to the motorcycle 1. The exterior surface faces to the left. The side cover 50 includes: a cover main body 51 on which the exterior surface is formed; and an edge wall portion 52. The edge wall portion 52 extends from an outer edge of the cover main body 51 to the right (i.e., in a direction from the exterior surface to a reverse surface of the cover main body 51). The cover main body 51 is in continuity with the edge wall portion 52 via a bending portion 54 formed into a bent shape. The angle formed by the bending portion 54 is not less than 90 degrees. The bending portion 54 is formed by: an end portion of the cover main body 51 and at least a part of the edge wall portion 52. That is, the edge wall portion 52 is necessarily formed with the bending portion 54. Each of the bending portion 54 and the edge wall portion 52 is formed on the entire perimeter of the cover main body 51. The bending portion 54 is visually perceived as an outline of the side cover 50 when the motorcycle 1 is seen from the left (seen from the side of the exterior surface).

The cover main body 51 is constituted by: an upper cover main body 51U included in the upper cover portion 31; and a lower cover main body 51D included in the lower cover portion 32. The edge wall portion 52 is constituted by: an edge wall portion 52U included in the upper cover portion 31; and an edge wall portion 52D included in the lower cover portion 32. The bending portion 54 is constituted by: a bending portion 54U included in the upper cover portion 31; and a bending portion 54D included in the lower cover portion 32. In other words, the upper cover portion 31 includes: the upper cover main body 51U; and the edge wall portion 52U which is in continuity with the upper cover main body 51U via the bending portion 54U. The lower cover portion 32 includes: the lower cover main body 51D; and the edge wall portion 52D which is in continuity with the lower cover main body 51D via the bending portion 54D.

A front end portion of the upper cover main body 51U and a front end portion of the lower cover main body 51D constitute an acute-angled corner portion 33. Further, acute-angled corner portions 34 and 35 are respectively formed at a rear end of the upper cover main body 51U and at a rear end of the lower cover main body 51D. The bending portion 54U of the upper cover portion 31 is constituted by a bending portion 56a and a bending portion 56b. The bending portion 56a is formed at an upper end portion of the upper cover main body 51U. The bending portion 56b is formed at a lower end portion of the upper cover main body 51U. Meanwhile, the bending portion 54D of the lower cover portion 32 is constituted by: a bending portion 57a; a bending portion 57b; and a bending portion 57c. The bending portion 57a extends obliquely upward and forward from the corner portion 35 of the lower cover main body 51D. The bending portion 57b extends obliquely downward and forward from the corner portion 35 of the lower cover main body 51D. The bending portion 57c extends obliquely downward and rearward from the corner portion 33 of the lower cover main body 51D.

As shown in FIG. 2, the side cover 50 has substantially circular holes 41A, 41B, 41C, and 41D. The holes 41A, 41B, 41C, and 41D are formed through the side cover 50 in a thickness direction of the cover main body 51. In this embodiment, the four holes 41A, 41B, 41C, and 41D are formed through the side cover 50; however, the number of holes is not limited to any particular number. Each of the holes 41A, 41B, 41C, and 41D does not have to have a circular shape. Further, the holes 41A, 41B, 41C, and 41D are not essential, and may be omitted.

As shown in FIG. 5, FIG. 6, and FIG. 7, the holes 41A, 41B, 41C, and 41D are respectively formed by inner wall surfaces of tubular protruding portions 53A, 53B, 53C, and 53D. The protruding portions 53A, 53B, 53C, and 53D protrude to the right from the cover main body 51 (i.e., in the direction from the exterior surface toward the reverse surface of the cover main body 51). That is, the length of each of the holes 41A, 41B, 41C, and 41D in a right/left direction is longer than the thickness of the cover main body 51. The protruding portions 53A, 53B, 53C, and 53D are in continuity with the cover main body 51 via respective bending portions 55A, 55B, 55C, and 55D, each of which is formed to into a bent shape.

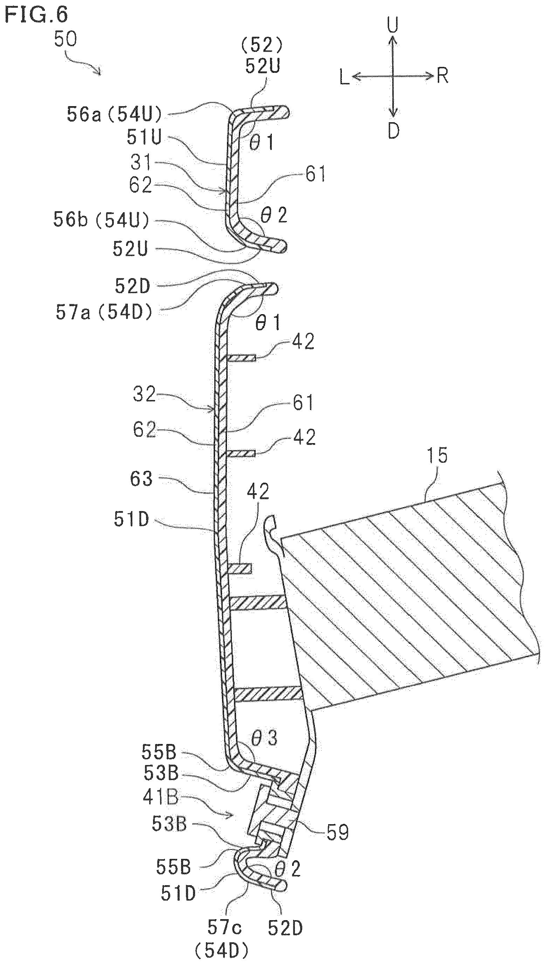

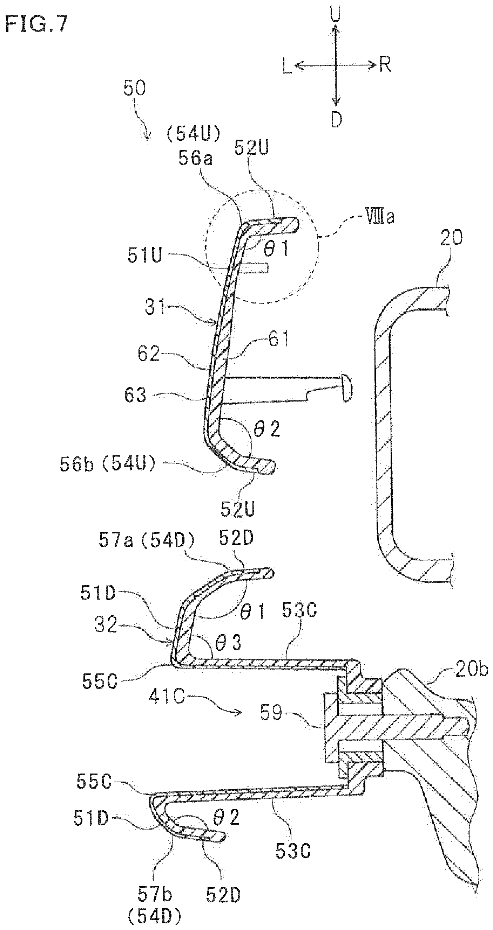

The hole 41A is formed at a boundary portion between the upper cover portion 31 and the lower cover portion 32. The holes 41B and 41C are formed at the lower cover portion 32. The hole 41D is formed at the upper cover portion 31. The holes 41A, 41B, and 41C are used to attach the side cover 50 to the vehicle body frame 2. As shown in FIG. 5 and FIG. 6, the side cover 50 is fixed to a radiator 15 with a fastening member 59 inserted into each of the holes 41A and 41B. The radiator 15 is fixed to the down frame 21. Further, as shown in FIG. 7, the side cover 50 is fixed to a bracket 20b of the corresponding main frame 20 with another fastening member 59 inserted into the hole 41C.

As shown in FIG. 3 and FIG. 6, on the reverse surface of the lower cover main body 51D, reinforcing ribs 42 are formed to protrude. In this embodiment, three ribs 42 are provided. Each of the ribs 42 radially extends from an outer circumferential surface of the protruding portion 53C. However, the number of the ribs 42 is not limited to any particular number. The ribs 42 are not essential, and may be omitted. The ribs 42 may be provided around any of the protruding portions 53A, 53B, and 53D. Alternatively, the ribs 42 may be provided at a position which is not around any of the protruding portions 53A, 53B, 53C, and 53D.

FIG. 5 is a cross-section of the side cover 50 along a line V-V in FIG. 2. The line V-V passes through the hole 41A. Further, the line V-V passes through portions of the upper cover portion 31 and the lower cover portion 32 which are continuous with each other. In the cross-section shown in FIG. 5, there are the edge wall portion 52U, the bending portion 56a (54U), the upper cover main body 51U, the bending portion 55A, the protruding portion 53A, the bending portion 55A, the lower cover main body 51D, the bending portion 57c (54D), and the edge wall portion 52D, in this order from the top to the bottom.

In the cross-section of FIG. 5, the angle θ1 formed by the bending portion 56a of the upper cover portion 31 is approximately 90 degrees. As for the angle θ3 of the bending portion 55A in the cross-section of FIG. 5, the angle θ3 formed by a portion of the bending portion 55A connecting the upper cover main body 51U with the protruding portion 53A is approximately 110 degrees. Meanwhile, in the cross-section of FIG. 5, the angle θ3 formed by a portion of the bending portion 55A connecting the protruding portion 53A with the lower cover main body 51D is approximately 100 degrees. Further, in the cross-section of FIG. 5, the angle θ2 formed by the bending portion 57c of the lower cover portion 32 is approximately 130 degrees. Thus, in the cross-section of FIG. 5, bending angles of the bending portions 56a and 57c respectively provided at upper and lower ends of the cover main body 51 are different from each other.

In the cross-section of FIG. 5, the cover main body 51 is formed into a curved shape bulging to the left, i.e., toward the obverse, relative to a virtual line L5. The virtual line L5 is the line connecting the bending portion 56a and the bending portion 57c. Further, in the cross-section of FIG. 5, the width of the cover main body 51 is longer than the length of each of the edge wall portions 52U and 52D. In the cross-section of FIG. 5, the width of the cover main body 51 is the length of the cover main body 51 in the up/down direction including the length of the protruding portion 53A in the up/down direction. Furthermore, in the cross-section of FIG. 5, the lengths of the edge wall portions 52U and 52D which are respectively in continuity with the upper and lower ends of the cover main body 51 are different from each other. In the cross-section of FIG. 5, the lengths of the edge wall portions 52U and 52D are the lengths of the edge wall portions 52U and 52D in the right/left direction.

FIG. 5 is the cross-section of the side cover 50 along the bending line V-V. Another cross-section of the side cover 50 has a structure substantially similar to the above-described structure of the cross-section of FIG. 5. Said other cross-section is a cross-section of the side cover 50 along a straight line passing through the hole 41A. Said other cross-section corresponds to a first cross-section or a second cross-section of the exterior cover of the present teaching. The bending portions 54U and 54D respectively formed at upper and lower end portions of the cover main body 51 in said other cross-section correspond to two first bending portions formed at both end portions of a cover main body in the first cross-section of the exterior cover of the present teaching, or correspond to two second bending portions formed at both end portions of the cover main body in the second cross-section of the exterior cover of the present teaching. It should be noted that the first cross-section or the second cross-section of the exterior cover of the present teaching may include the cross-section of FIG. 5.

Other than the line V-V in FIG. 2, there are lines each crossing the exterior surface and passing through the portions of the upper cover main body 51U and the lower cover main body 51D which are continuous with each other. Thus, there are a plurality of cross-sections of the side cover 50 along these lines, though these cross-sections are not illustrated. Also in at least one of these cross-sections of the side cover 50, the bending angles of the bending portions 54U and 54D respectively provided at the upper and lower ends of the cover main body 51 are different from each other, similarly to those in FIG. 5. Further, in at least one of these cross-sections, the cover main body 51 is formed into a curved shape bulging to the left, i.e., toward the obverse, relative to a virtual line. The virtual line is the line connecting the bending portion 54U and the bending portion 54D which are respectively in continuity with the upper and lower ends of the cover main body 51. Furthermore, in at least one of these cross-sections, the width of the cover main body 51 is longer than the length of each of the edge wall portions 52U and 52D which are respectively in continuity with the upper and lower ends of the cover main body 51. Still further, in at least one of these cross-sections, the lengths of the edge wall portions 52U and 52D which are respectively in continuity with the upper and lower ends of the cover main body 51 are different from each other.

FIG. 6 is a cross-section of the side cover 50 along a line VI-VI in FIG. 2 passing through the hole 41B. The line VI-VI does not pass through the portions of the upper cover portion 31 and the lower cover portion 32 which are continuous with each other. In the cross-section of FIG. 6, there are the edge wall portion 52U, the bending portion 56a (54U), the upper cover main body 51U, the bending portion 56b (54U), the edge wall portion 52U, the edge wall portion 52D, the bending portion 57a (54D), the lower cover main body 51D, the bending portion 55B, the protruding portion 53B, the bending portion 55B, the lower cover main body 51D, the bending portion 57c (54D), and the edge wall portion 52D, in this order from the top to the bottom.

In the cross-section of FIG. 6, the angle θ1 formed by the bending portion 56a of the upper cover portion 31 is approximately 90 degrees. Further, in the cross-section of FIG. 6, the angle θ2 formed by the bending portion 56b of the upper cover portion 31 is approximately 100 degrees. Thus, in the cross-section of FIG. 6, the bending angles of the bending portions 56a and 56b respectively provided at the upper and lower ends of the upper cover main body 51U are different from each other. Moreover, in the cross-section of FIG. 6, the angle θ1 formed by the bending portion 57a of the lower cover portion 32 is approximately 90 degrees. As for the angle θ3 of the bending portion 55B in the cross-section of FIG. 6, the angle θ3 formed by an upper portion of the protruding portion 53B is approximately 110 degrees. Further, in the cross-section of FIG. 6, the angle θ2 formed by the bending portion 57c of the lower cover portion 32 is approximately 110 degrees. Thus, in the cross-section of FIG. 6, the bending angles of the bending portions 57a and 57c respectively provided at the upper and lower ends of the lower cover main body 51D are different from each other.

In the cross-section of FIG. 6, the lower cover main body 51D is formed into a curved shape gently bulging to the left, i.e., toward the obverse, relative to a virtual line not illustrated. The virtual line is the line connecting the bending portion 57a with the bending portion 57c. Further, in the cross-section of FIG. 6, the upper cover main body 51U is shaped to be substantially flat. Furthermore, in the cross-section of FIG. 6, the width of the upper cover main body 51U is longer than the length of each of the two edge wall portions 52U positioned on upper and lower sides of the upper cover main body 51U. In the cross-section of FIG. 6, the width of the upper cover main body 51U is the length of the upper cover main body 51U in the up/down direction. In the cross-section of FIG. 6, the lengths of the two edge wall portions 52U are the lengths of the two edge wall portions 52U in the right/left direction. Moreover, in the cross-section of FIG. 6, the width of the lower cover main body 51D is longer than the length of each of the two edge wall portions 52D positioned on upper and lower sides of the lower cover main body 51D. In the cross-section of FIG. 6, the width of the lower cover main body 51D is the length of the lower cover main body 51D in the up/down direction. In the cross-section of FIG. 6, the lengths of the two edge wall portions 52D are the lengths of the two edge wall portions 52D in the right/left direction. Further, in the cross-section of FIG. 6, the lengths of the two edge wall portions 52U which are respectively in continuity with the upper and lower ends of the upper cover main body 51U are substantially identical to each other. Furthermore, the lengths of the two edge wall portions 52D which are respectively in continuity with the upper and lower ends of the lower cover main body 51D are substantially identical to each other.

FIG. 6 is the cross-section of the side cover 50 along the bending line VI-VI. Another cross-section of the side cover 50 has a structure substantially similar to the above-described structure of the cross-section of FIG. 6. Said other cross-section is a cross-section of the side cover 50 along a straight line which passes through the portions of the upper cover main body 51U and the lower cover main body 51D separated from each other and passes through the hole 41B. Said other cross-section corresponds to the first cross-section or the second cross-section of the exterior cover of the present teaching. The two bending portions 54U (or 54D) respectively formed at the upper and lower end portions of the upper cover main body 51U (or the lower cover main body 51D) in said other cross-section correspond to the two first bending portions respectively formed at both end portions of the cover main body in the first cross-section of the exterior cover of the present teaching, or correspond to the two second bending portions respectively formed at both end portions of the cover main body in the second cross-section of the exterior cover of the present teaching. It should be noted that the first cross-section or the second cross-section of the exterior cover of the present teaching may include the cross-section of FIG. 6.

FIG. 7 is a cross-section of the side cover 50 along a line VII-VII in FIG. 2, passing through the hole 41C. The line VII-VII does not pass through the portions of the upper cover portion 31 and the lower cover portion 32 which are continuous with each other. In the cross-section of FIG. 7, there are the edge wall portion 52U, the bending portion 56a (54U), the upper cover main body 51U, the bending portion 56b (54U), the edge wall portion 52U, the edge wall portion 52D, the bending portion 57a (54D), the lower cover main body 51D, the bending portion 55C, the protruding portion 53C, the bending portion 55C, the lower cover main body 51D, the bending portion 57b (54D), and the edge wall portion 52D, in this order from the top to the bottom.

In the cross-section of FIG. 7, the angle θ1 formed by the bending portion 56a of the upper cover portion 31 is approximately 110 degrees. Further, in the cross-section of FIG. 7, the angle θ2 formed by the bending portion 56b of the upper cover portion 31 is approximately 90 degrees. Thus, in the cross-section of FIG. 7, the bending angles of the bending portions 56a and 56b respectively provided at the upper and lower ends of the upper cover main body 51U are different from each other. Moreover, in the cross-section of FIG. 7, the angle θ1 formed by the bending portion 57a of the lower cover portion 32 is approximately 100 degrees. As for the angle θ3 of the bending portion 55C in the cross-section of FIG. 7, the angle θ3 formed by an upper portion of the protruding portion 53C is approximately 90 degrees. Further, in the cross-section of FIG. 7, the angle θ2 formed by the bending portion 57b of the lower cover portion 32 is approximately 150 degrees. Thus, in the cross-section of FIG. 7, the bending angles of the bending portions 57a and 57b respectively provided at the upper and lower ends of the lower cover main body 51D are different from each other.

In the cross-section of FIG. 7, the upper cover main body 51U is formed into a curved shape gently bulging to the left, i.e., toward the obverse, relative to a virtual line not illustrated. The virtual line is the line connecting the bending portion 56a with the bending portion 56b. Further, in the cross-section of FIG. 7, the lower cover main body 51D is formed into a curved shape gently bulging to the left, i.e., toward the obverse, relative to a virtual line not illustrated. The virtual line is the line connecting the bending portion 57a and the bending portion 57b. Furthermore, in the cross-section of FIG. 7, the width of the upper cover main body 51U is longer than the length of each of the two edge wall portions 52U which are respectively positioned on the upper and lower sides of the upper cover main body 51U. In the cross-section of FIG. 7, the width of the upper cover main body 51U is the length of the upper cover main body 51U in the up/down direction. In the cross-section of FIG. 7, the lengths of the two edge wall portions 52U are the lengths of the two edge wall portions 52U in the right/left direction. Moreover, in the cross-section of FIG. 7, the width of the lower cover main body 51D is longer than the length of each of the two edge wall portions 52D which are respectively positioned on the upper and lower sides of the lower cover main body 51D. In the cross-section of FIG. 7, the width of the lower cover main body 51D is the length of the lower cover main body 51D in the up/down direction. In the cross-section of FIG. 7, the lengths of the two edge wall portions 52D are the length of the two edge wall portions 52D in the right/left direction.

Note that the cross-section of FIG. 7 corresponds to the first cross-section or the second cross-section of the exterior cover of the present teaching. Further, the bending portions 56a and 56b respectively formed at the upper and lower end portions of the upper cover main body 51U in the cross-section of FIG. 7 correspond to the two first bending portions respectively formed at both end portions of the cover main body in the first cross-section of the exterior cover of the present teaching, or correspond to the two second bending portions respectively formed at both end portions of the cover main body in the second cross-section of the exterior cover of the present teaching. Furthermore, the bending portions 57a and 57b respectively formed at the upper and lower end portions of the lower cover main body 51D in the cross-section of FIG. 7 correspond to the two first bending portions respectively formed at both end portions of the cover main body in the first cross-section of the exterior cover of the present teaching, or correspond to the two second bending portions respectively formed at both end portions of the cover main body in the second cross-section of the exterior cover of the present teaching.

Other than the lines VI-VI and VII-VII in FIG. 2, there are lines each crossing the exterior surface and not passing through the portions of the upper cover main body 51U and the lower cover main body 51D which are continuous with each other. Thus, there are a plurality of cross-sections of the side cover 50 along these lines, though these cross-sections are not illustrated. Also in at least one of these cross-sections of the side cover 50, the bending angles of the two bending portions 54U (or 54D) respectively provided at both ends of the upper cover main body 51U (or lower cover main body 51D) are different from each other, similarly to those in FIG. 6 and FIG. 7. Further, in at least one of these cross-sections, the upper cover main body 51U (or the lower cover main body 51D) is formed into a curved shape bulging to the left, i.e., toward the obverse, relative to a virtual line. The virtual line is the line connecting the two bending portions 54U (or 54D) at both end portions. Furthermore, in at least one of these cross-sections, the width of the upper cover main body 51U (or the lower cover main body 51D) is longer than the length of each of the two edge wall portions 52U (or 52D) which are respectively in continuity with both ends thereof. Still further, in at least one of these cross-sections, the lengths of the two edge wall portions 52U (or 52D) which are respectively in continuity with both ends of the upper cover main body 51U (or the lower cover main body 51D) are different from each other. Each of these cross-sections is along a line which is not one of the lines VI-VI and VII-VII and which does not pass through the portions of the upper cover main body 51U and the lower cover main body 51D which are continuous with each other. Examples of these cross-sections include the cross-section of the side cover 50 which is orthogonal to the cross-section of the side cover 50 along the line VII-VII, and which is cut along a line passing through either one of the upper cover portion 31 and the lower cover portion 32. In other words, this cross-section is orthogonal to the cross-section of FIG. 7, and is cut along a line passing through either one of the upper cover portion 31 and the lower cover portion 32. Reference is made to a cross-section orthogonal to the cross-section of FIG. 7 and cut along a line passing through the upper cover portion 31 only. In this cross-section, the two bending portions 56a are formed at both end portions of the upper cover main body 51U.

The shape of the side cover 50 has been described above. The following describes the structure of the side cover 50. As shown in FIG. 6 and FIG. 7, the side cover 50 is formed of a first resin layer 62 and a second resin layer 61. As described above, the side cover 50 is the integral member. At least a part of the side cover 50 is formed by an integral layered resin portion 63. The integral layered resin portion 63 is formed of the second resin layer 61 and the first resin layer 62 which are layered on top of and integrally molded with each other. In this embodiment, the first resin layer 62 is located to the left of, i.e., closer to the obverse than, the second resin layer 61. The first resin layer 62 forms the exterior surface of the side cover 50.

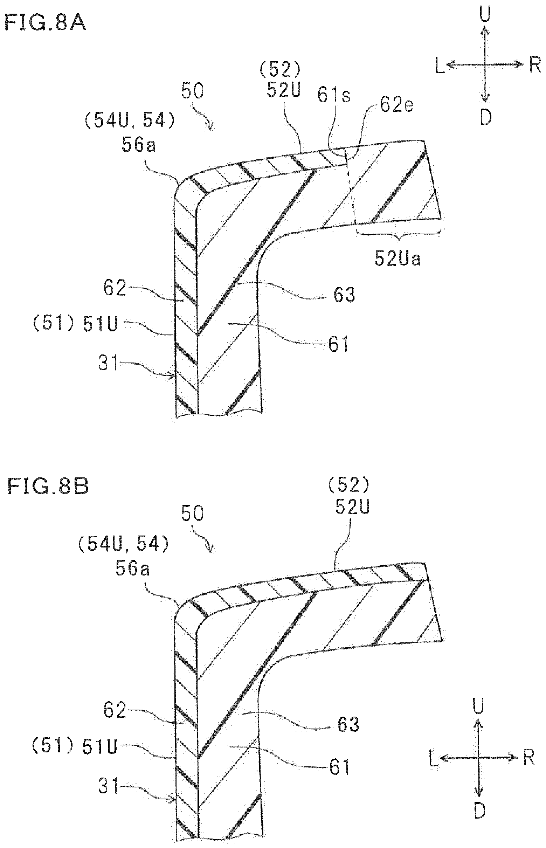

As shown in FIG. 5 to FIG. 7, the integral layered resin portion 63 forms: the whole of the cover main body 51; the whole of the bending portion 54; and at least a part of the edge wall portion 52. FIG. 8A is an enlarged view of a portion labelled with "Villa" in FIG. 7. An upper part of the edge wall portion 52U which is in continuity with the upper end portion of the upper cover main body 51U via the bending portion 56a has the following structure: as shown in FIG. 8A, throughout the whole upper part of the edge wall portion 52U, a portion of the upper part which is closer to the bending portion 56a is formed by the integral layered resin portion 63, while the remaining portion (the portion labelled with "52Ua" in FIG. 8A) is formed by the second resin layer 61 only. To be more specific, a level-difference portion 61s is formed on the second resin layer 61 of the edge wall portion 52U, and the first resin layer 62 fills the level-difference portion 61s. The length of an edge portion 62e of the first resin layer 62 in the up/down direction is identical to the length of the level-difference portion 61s in the up/down direction. Due to this, in the edge wall portion 52U, the second resin layer 61 and the first resin layer 62 are leveled with and adjacent to each other. It should be noted that the edge wall portion 52U which is in continuity with the bending portion 56a does not have to be provided with the portion 52Ua formed by the second resin layer 61 only. For example, as shown in FIG. 8B, in one cross-section of the side cover 50, the whole edge wall portion 52U may be formed by the integral layered resin portion 63.

A lower part of the edge wall portion 52U which is in continuity with the lower end portion of the upper cover main body 51U via the bending portion 56b has the following structure: as shown in FIG. 6 and FIG. 7, throughout the whole lower part of the edge wall portion 52U which is in continuity with the bending portion 56b, a portion of the lower part which is closer to the bending portion 56b is formed by the integral layered resin portion 63, while the remaining portion is formed by the second resin layer 61 only. It should be noted that, in at least one of cross-sections of the side cover 50 crossing the exterior surface, the whole edge wall portion 52U which is in continuity with the bending portion 56b may be formed by the integral layered resin portion 63.

Further, an upper part of the edge wall portion 52D which is in continuity with the lower cover main body 51D via the bending portion 57a has the following structure: as shown in FIG. 6 and FIG. 7, throughout the whole upper part of the edge wall portion 52D, a portion of the upper part which is closer to the bending portion 57a is formed by the integral layered resin portion 63, while the remaining portion is formed by the second resin layer 61 only. It should be noted that, in at least one of cross-sections of the side cover 50 crossing the exterior surface, the whole edge wall portion 52D which is in continuity with the bending portion 57a may be formed by the integral layered resin portion 63.

A lower part of the edge wall portion 52D which is in continuity with the lower cover main body 51D via the bending portion 57c has the following structure: in the cross-section of FIG. 5, the whole lower part of the edge wall portion 52D is formed by the integral layered resin portion 63. The lower or upper part of the edge wall portion 52D which is in continuity with the lower cover main body 51D via the bending portion 57c or 57b has the following structure: in each of the cross-sections of FIG. 6 and FIG. 7, a portion of the lower or upper part of the edge wall portion 52D closer to the bending portion 57c or 57b is formed by the integral layered resin portion 63, while the remaining portion is formed by the second resin layer 61 only.

Reference is made to a cross-section of the side cover 50 along a line crossing the exterior surface and passing through the portions of the upper cover portion 31 and the lower cover portion 32 which are continuous with each other. In said cross-section, the integral layered resin portion 63 forms: the cover main body 51; the bending portions 56a and 57c; and at least a part of each of the edge wall portions 52U and 52D. The bending portions 56a and 57c are formed at both end portions of the cover main body 51. The edge wall portions 52U and 52D are respectively in continuity with both end portions of the cover main body 51 via the respective bending portions 56a and 57c. Reference is made to the following cross-sections A, B, and C of the side cover 50: the cross-section A of the side cover 50 is along a line crossing the exterior surface and passing through the portions of the upper cover portion 31 and the lower cover portion 32 separated from each other. The cross-section B of the side cover 50 is along a line crossing the exterior surface and passing through the upper cover portion 31 only. The cross-section C of the side cover 50 is along a line crossing the exterior surface and passing through the lower cover portion 32 only. In the cross-sections A and/or B of the side cover 50, the integral layered resin portion 63 forms: the upper cover main body 51U; the two bending portions 54U respectively formed at both end portions of the upper cover main body 51U; and at least a part of each of the two edge wall portions 52U which are respectively in continuity with both end portions of the upper cover main body 51U via the respective bending portions 54U. In the cross-sections A and/or C of the side cover 50, the integral layered resin portion 63 forms: the lower cover main body 51D; the two bending portions 54D respectively formed at both end portions of the lower cover main body 51D; and at least a part of each of the two edge wall portions 52D which are respectively in continuity with both end portions of the lower cover main body 51D via the respective bending portions 54D.

In the cross-section of FIG. 5, the integral layered resin portion 63 forms: the whole bending portion 55A; and at least a part of the protruding portion 53A which is closer to the bending portion 55A. This does not apply only to the cross-section of FIG. 5. In any of such cross-sections including the protruding portion 53A, the integral layered resin portion 63 forms the whole bending portion 55A and at least the part of the protruding portion 53A which is closer to the bending portion 55A. If only a part pf the protruding portion 53A is formed by the integral layered resin portion 63, the remaining portion is formed by the second resin layer 61 only. Further, in any of such cross-sections including the protruding portion 53B, the integral layered resin portion 63 forms: the whole bending portion 55B; and at least a part of the protruding portion 53B which is closer to the bending portion 55B, as shown in FIG. 6. Furthermore, in any of such cross-sections including the protruding portion 53C, the integral layered resin portion 63 forms: the whole bending portion 55C; and at least a part of the protruding portion 53C which is closer to the bending portion 55C, as shown in FIG. 7. Still further, in any of such cross-sections including the protruding portion 53D, the integral layered resin portion 63 forms: the whole bending portion 55D; and at least a part of the protruding portion 53D which is closer to the bending portion 55D.

The first resin layer 62 has a Young's modulus higher than and a thickness smaller than those of the second resin layer 61. The Young's modulus of each of the first resin layer 62 and the second resin layer 61 is not limited to any particular value. For example, the Young's modulus of the first resin layer 62 is 2000 to 3000 MPa, and the Young's modulus of the second resin layer 61 is 1000 to 1500 MPa. The thickness of each of the first resin layer 62 and the second resin layer 61 is not limited to any particular value. For example, the thickness of the second resin layer 61 is 1.8 to 3 mm, and the thickness of the first resin layer 62 is 0.2 to 0.4 mm. The ratio of thickness between the first resin layer 62 and the second resin layer 61 is not limited to any particular ratio. For example, the first resin layer 62 is 0.05 to 0.2 times as thick as the second resin layer 61. It should be noted that in FIG. 5 to FIG. 8, the thickness of the first resin layer 62 is illustrated with exaggeration.

The first resin layer 62 is made of crystalline resin. It is preferable that the first resin layer 62 has a higher degree of crystallinity than the second resin layer 61. The second resin layer 61 is preferably made of crystalline resin because it facilitates integral molding; however, the second resin layer 61 may be made of amorphous (non-crystalline) resin. It is preferable that the first resin layer 62 has a yield point higher than that of the second resin layer 61. In addition, it is preferable that the first resin layer 62 has a fracture point higher than that of the second resin layer 61. It is preferable that the density of the first resin layer 62 is substantially equal to or lower than the density of the second resin layer 61; however, the density of the first resin layer 62 may be slightly higher than that of the second resin layer 61. When the resin material of the first resin layer 62 is different from that of the second resin layer 61, the degree of crystallinity of the first resin layer 62 may be lower than the degree of crystallinity of the second resin layer 61.

Note that the "crystalline resin" used herein means resin which at least partially includes a crystalline region, such as polyethylene (PE), polypropylene (PP), polyamide (nylon) (PA), polycarbonate (PC), polyacetals (polyoxymethylene) (POM), polyphenylene sulfide (PPS), vinylidene chloride (PVDC), polyethylene terephthalate (PETP), and fluoropolymers (polytetrafluoroethylene) (PTFE). Meanwhile, the "amorphous resin" used herein means resin structured by an amorphous non-crystalline region only, such as polyvinyl chloride (PVC), polyvinyl acetate (PVAC), polyvinyl alcohol (PVAL), polyvinyl butyral (PVB), polystyrene (PS), acrylonitrile butadiene styrene (ABS), polymethyl methacrylate (metacrylate resin) (PMMA), polyphenylene oxide (Noryl) (PPO), and polyurethane (PUR).

Various types of resin materials may be used as the material of the first resin layer 62 and the second resin layer 61; however, in terms of weight reduction and cost reduction, olefinic or polyamide resins are preferably used. For example, polypropylene (PP), polyethylene (PE), polyethylene terephthalate (PET), nylon, or the like may be used as the material of the first resin layer 62 and the second resin layer 61. It is preferable that the first resin layer 62 and the second resin layer 61 are made of a resin material of the same type; however, the first resin layer 62 and the second resin layer 61 may be made of resin materials different from each other.

When the first resin layer 62 and the second resin layer 61 are made of the same type of resin material, the degree of crystallinity of the first resin layer 62 is arranged to be higher than the degree of crystallinity of the second resin layer 61. This enables the Young's modulus of the first resin layer 62 to be higher than the Young's modulus of the second resin layer 61. In this case, the density of the first resin layer 62 is slightly higher than but almost the same as the density of the second resin layer 61. When both of the first resin layer 62 and the second resin layer 61 are made of polypropylene, for example, the degree of crystallinity of the first resin layer 62 is in the range from 65.1% to 75.5%, for example, while the degree of crystallinity of the second resin layer 61 is 60.5%, for example. In this case, the Young's modulus of the first resin layer 62 is 2800 MPa, for example, while the Young's modulus of the second resin layer 61 is 1652 MPa, for example. In the above case, the density of the first resin layer 62 is slightly higher than but almost the same as the density of the second resin layer 61.

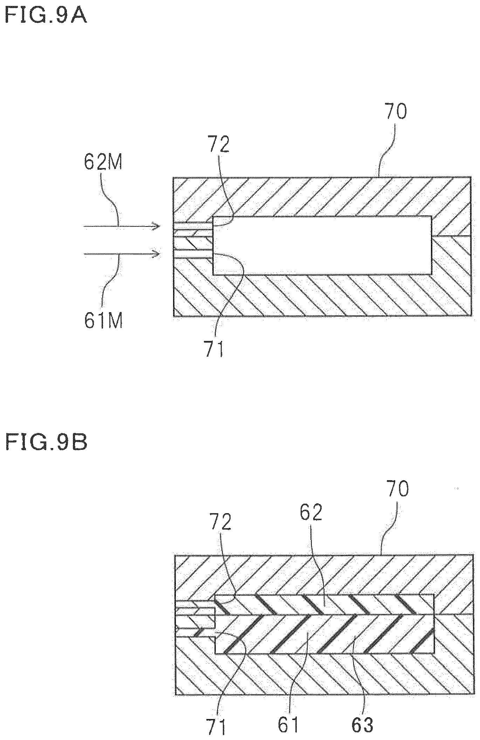

The method of producing the side cover 50 which at least partially includes the integral layered resin portion 63 formed of the first resin layer 62 and the second resin layer 61 which are integrally molded into a layered structure is not limited to any particular method. For example, injection molding may be adopted. As shown in FIG. 9A, for example, a material 61M for the second resin layer 61 and a material 62M for the first resin layer 62 are respectively injected through a first gate 71 and a second gate 72 of a mold 70. Then, as shown in FIG. 9B, the side cover 50 including the integral layered resin portion 63 formed of the first resin layer 62 and the second resin layer 61 which are integrally molded into the layered structure is produced.

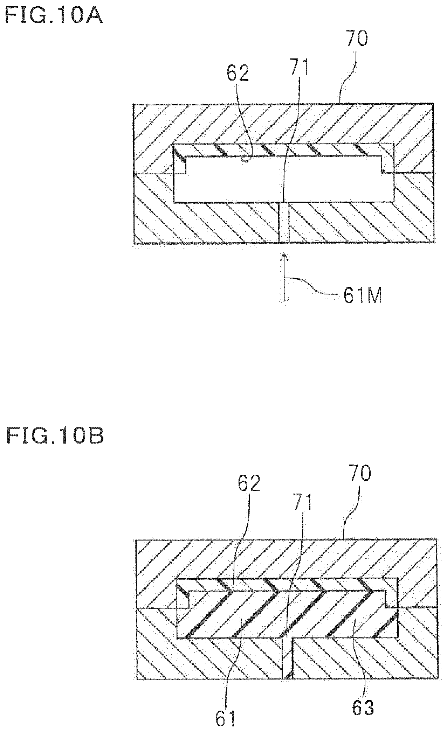

Alternatively, as shown in FIG. 10A, after the first resin layer 62 formed into a sheet-like member is disposed in the mold 70, the material 61M for the second resin layer 61 may be injected through a gate 71. Then, as shown in FIG. 10B, the side cover 50 including the integral layered resin portion 63 formed of the first resin layer 62 and the second resin layer 61 which are integrally molded into the layered structure is produced. In this case, as the first resin layer 62, there may be used a resin film having a Young's modulus higher than that of the second resin layer 61. It is preferable to use a stretched film, the degree of crystallinity of which has been increased by stretching. Alternatively, such a resin film may be subjected to heat treatment or the like in advance to increase its degree of crystallinity, so that the first resin layer 62 has a Young's modulus higher than that of the second resin layer 61. Thus, it is also possible for the side cover 50 including the integral layered resin portion 63 formed of the first resin layer 62 and the second resin layer 61 which are integrally molded into the layered structure to be obtained by film insertion molding. A nucleating agent may be used to increase the Young's modulus (crystallinity).

The above-described side cover 50 (exterior cover) of this embodiment has the following features. In a cross-section of the side cover 50 (first cross-section of the exterior cover) which crosses the exterior surface, the integral layered resin portion 63 forms: the cover main body (the cover main body 51, the upper cover main body 51U, or the lower cover main body 51D) on which the exterior surface is formed; and the two bending portions 54 (first bending portions) at both end portions of the cover main body. The integral layered resin portion 63 is formed of the first resin layer 62 and the second resin layer 61 which are integrally molded into the layered structure.

The first resin layer 62 has a crystalline structure, and has a Young's modulus higher than that of the second resin layer 61. Because of this, it is relatively easier to enhance the rigidity in the first resin layer 62 than in the second resin layer 61. However, if the thickness of the first resin layer 62 is too large, it is difficult to ensure the toughness required for the side cover 50. Thus, in this embodiment, the first resin layer 62 is made thinner than the second resin layer 61, to ensure the rigidity and the toughness. Because the Young's modulus of the second resin layer 61 is lower than that of the first resin layer 62, it is easier to ensure the toughness. However, it is difficult to ensure the rigidity in the second resin layer 61. Thus, the second resin layer 61 is made thicker than the first resin layer 62, to ensure the rigidity and the toughness. Further, the second resin layer 61 and the first resin layer 62 are integrally molded. Thus, by virtue of the property of the first resin layer 62, in which enhancement of the rigidity is easier, the rigidity required for the second resin layer 61 is reduced. This makes it possible to decrease the thickness of the second resin layer 61 while ensuring the rigidity and the toughness. Moreover, the side cover 50 includes the integral layered resin portion 63. The integral layered resin portion 63 is formed of the first resin layer 62 and the second resin layer 61 which are layered on top of and integrally molded with each other; and the first resin layer 62 made of resin with a crystalline structure is thinner than the second resin layer 61 made of resin having a Young's modulus lower than that of the first resin layer 62. This configuration enables weight reduction of the side cover 50 while ensuring the rigidity and the toughness.

Further, in this embodiment, in the cross-section of the side cover 50 (first cross-section of the exterior cover) which crosses the exterior surface, the integral layered resin portion 63 forms: the cover main body (the cover main body 51, the upper cover main body 51U, or the lower cover main body 51D) on which the exterior surface is formed; and the two bending portions 54 (first bending portions) respectively formed into bent shapes at both end portions of the cover main body. The integral layered resin portion 63 is formed of the first resin layer 62 and the second resin layer 61 which are integrally molded into the layered structure. Thus, the rigidity of the side cover 50 against bending deformation and torsional deformation is further enhanced by exercising ingenuity in terms of the shape of the integral layered resin portion 63 including the first resin layer 62 in which enhancement of the rigidity is easier. As compared to the case where only the cover main body is formed by the integral layered resin portion 63 formed of the first resin layer 62 and the second resin layer 61 which are integrally molded into the layered structure, for example, it is possible to achieve greater rigidity while ensuring the toughness.

Thus, while the rigidity and the toughness required for the side cover 50 are ensured, further weight reduction is promoted by reducing the thicknesses of the first resin layer 62 and the second resin layer 61.

If the side cover 50 is formed merely by the first resin layer 62 having the higher Young's modulus, the rigidity of the side cover 50 is too high to make it brittle. This decreases the toughness of the overall side cover 50, thereby increasing the possibility that fracture is caused by falling off. However, the side cover 50 of this embodiment has the second resin layer 61 having the lower Young's modulus, which suppresses the reduction of the toughness of the overall cover 50. This prevents the occurrence of fracture even though the rigidity is enhanced, and thus the function as an exterior cover is not impaired. Further, the side cover 50 of this embodiment makes it possible to achieve weight reduction while ensuring the rigidity of the side cover 50, compared to the case where the side cover 50 is formed merely by the second resin layer 61.

Further, in this embodiment, in the cross-section of the side cover 50 (first cross-section of the exterior cover) which crosses the exterior surface, the two edge wall portions 52 (first edge wall portions) extend in the same direction from both respective end portions of the cover main body (the cover main body 51, the upper cover main body 51U, or the lower cover main body 51D). The two edge wall portions 52 (first edge wall portions) are formed by the integral layered resin portion 63 formed of the first resin layer 62 and the second resin layer 61 which are integrally molded into the layered structure. The rigidity of the side cover 50 against bending deformation and torsional deformation is further enhanced by exercising ingenuity in terms of the shape of the integral layered resin portion 63 including the first resin layer 62 in which enhancement of the rigidity is easier. Suppose there is a case where the two edge wall portions 52 extend in directions that are different from each other, for example. As compared to this case, the rigidity of the side cover 50 is improved with respect to the vertical direction, bending direction, and torsional direction of the exterior surface, while the toughness is ensured.

Thus, while the rigidity and the toughness required for the side cover 50 are ensured, further weight reduction is promoted by reducing the thicknesses of the first resin layer 62 and the second resin layer 61.

In this embodiment, in the cross-section of the side cover 50 (first cross-section of the exterior cover) crossing the exterior surface, the cover main body (the cover main body 51, the upper cover main body 51U, or the lower cover main body 51D) is formed into a bulging curved shape. The cover main body (the cover main body 51, the upper cover main body 51U, or the lower cover main body 51D) is formed by the integral layered resin portion 63. The integral layered resin portion 63 is formed of the first resin layer 62 and the second resin layer 61 which are integrally molded into the layered structure. The rigidity of the side cover 50 against bending deformation and torsional deformation is further enhanced by exercising ingenuity in terms of the shape of the integral layered resin portion 63 including the first resin layer 62 in which enhancement of the rigidity is easier. As compared to the case where the cover main body is substantially flat, for example, the rigidity of the side cover 50 is improved with respect to the vertical direction, bending direction, and torsional direction of the exterior surface, while the toughness is ensured.

Thus, while the rigidity and the toughness required for the side cover 50 are ensured, further weight reduction is promoted by reducing the thicknesses of the first resin layer 62 and the second resin layer 61.

In the cross-section of the side cover 50 of this embodiment (first cross-section of the exterior cover) which crosses the exterior surface, the width of the cover main body (the cover main body 51, the upper cover main body 51U, or the lower cover main body 51D) is longer than the length of each of the two edge wall portions 52 (first edge wall portions) which are respectively in continuity with both end portions of the cover main body via the respective bending portions 54 (first bending portions). The cover main body (the cover main body 51, the upper cover main body 51U, or the lower cover main body 51D) is formed by the integral layered resin portion 63. The integral layered resin portion 63 is formed of the first resin layer 62 and the second resin layer 61 which are integrally molded into the layered structure. As described above, the cover main body is formed into the curved shape. Therefore, as compared to the case where the cover main body is substantially flat, for example, it is possible to increase the width of the cover main body while maintaining the rigidity of the cover main body. The rigidity of the side cover 50 against bending deformation and torsional deformation is further enhanced by exercising ingenuity in terms of the shape of the integral layered resin portion 63 including the first resin layer 62 in which enhancement of the rigidity is easier. As compared to the case where the cover main body is substantially flat, for example, it is possible to reduce the thickness of the cover main body while maintaining the width and the rigidity of the cover main body (the cover main body 51, the upper cover main body 51U, or the lower cover main body 51D), as well as ensuring the toughness.

Thus, while the rigidity and the toughness required for the side cover 50 are ensured, further weight reduction is promoted by reducing the thicknesses of the first resin layer 62 and the second resin layer 61.

The degree of rigidity of the side cover 50 depends on the size of the bending angles of the bending portions 54. In the cross-section of the side cover 50 of this embodiment (first cross-section of the exterior cover) which crosses the exterior surface, the bending angles of the two bending portions 54 (first bending portions) provided at both end portions of the cover main body (the cover main body 51, the upper cover main body 51U, or the lower cover main body 51D) are different from each other. The cover main body (the cover main body 51, the upper cover main body 51U, or the lower cover main body 51D) is formed by the integral layered resin portion 63. The integral layered resin portion 63 is formed of the first resin layer 62 and the second resin layer 61 which are integrally molded into the layered structure. As compared to the case where the bending angles of the two bending portions 54 (first bending portions) are identical to each other, for example, it is easier to adjust the degree of rigidity of the side cover 50.

Thus, while the rigidity and the toughness required for the side cover 50 are ensured, further weight reduction is promoted by reducing the thicknesses of the first resin layer 62 and the second resin layer 61

The longer the lengths of the edge wall portions 52, the higher the rigidity of the side cover 50. In the cross-section of the side cover 50 of this embodiment (first cross-section of the exterior cover) which crosses the exterior surface, the two edge wall portions 52 (first edge wall portions) are formed by the integral layered resin portion 63 formed of the first resin layer 62 and the second resin layer 61 which are integrally molded into the layered structure. Further, in the cross-section of the side cover 50 which crosses the exterior surface, the lengths of the two edge wall portions 52 (first edge wall portions) are different from each other. The rigidity of the side cover 50 against bending deformation and torsional deformation is further enhanced by exercising ingenuity in terms of the shape of the integral layered resin portion 63 including the first resin layer 62 in which enhancement of the rigidity is easier. As compared to the case where the lengths of the two edge wall portions 52 (first edge wall portions) are identical to each other, for example, it is easier to adjust the rigidity of the side cover 50.

Thus it is possible to decrease the lengths of the edge wall portions 52 (first edge wall portions) to be as short as possible while ensuring the required rigidity. This leads to further weight reduction of the side cover 50.

In at least one cross-section of the side cover 50 of this embodiment which crosses the exterior surface, the integral layered resin portion 63 forms: the cover main body (the cover main body 51, the upper cover main body 51U, or the lower cover main body 51D); the two bending portions 54 at both end portions of the cover main body. As well, in a cross-section of the side cover 50 which is orthogonal to the at least one cross-section and crosses the exterior surface (second cross-section of the exterior cover), the integral layered resin portion 63 forms: the cover main body (the cover main body 51, the upper cover main body 51U, or the lower cover main body 51D); and the two bending portions 54 at both end portions of the cover main body. The rigidity of the side cover 50 against bending deformation and torsional deformation is further enhanced by exercising ingenuity in terms of the shape of the integral layered resin portion 63 including the first resin layer 62 in which enhancement of the rigidity is easier. As compared to the case where only the cover main body is formed by the integral layered resin portion 63 in the second cross-section of the side cover 50, for example, it is easier to ensure the rigidity of the side cover 50.

Thus, while the rigidity and the toughness required for the side cover 50 are ensured, further weight reduction is promoted by reducing the thicknesses of the first resin layer 62 and the second resin layer 61.

In the cross-section of the side cover 50 of this embodiment (first cross-section of the exterior cover) which crosses the exterior surface, the integral layered resin portion 63 forms the protruding portion (53A, 53B, 53C, or 53D) provided between both end portions of the cover main body (the cover main body 51, the upper cover main body 51U, or the lower cover main body 51D). The integral layered resin portion 63 is formed of the first resin layer 62 and the second resin layer 61 which are integrally molded into the layered structure. The rigidity of the side cover 50 against bending deformation and torsional deformation is further enhanced by exercising ingenuity in terms of the shape of the integral layered resin portion 63 including the first resin layer 62 in which enhancement of the rigidity is easier. As compared to the case where no protruding portion is provided, for example, the rigidity of the side cover 50 is further improved, while the toughness is ensured.

Thus, while the rigidity and the toughness required for the side cover 50 are ensured, further weight reduction is promoted by reducing the thicknesses of the first resin layer 62 and the second resin layer 61.

In this embodiment, the edge wall portions 52 are formed by the integral layered resin portion 63 formed of the first resin layer 62 and the second resin layer 61 which are integrally molded into the layered structure. Further, the edge wall portions 52 extend in a longitudinal direction of the side cover 50. The rigidity of the side cover 50 against bending deformation and torsional deformation is further enhanced by exercising ingenuity in terms of the shape of the integral layered resin portion 63 including the first resin layer 62 in which enhancement of the rigidity is easier. In this embodiment, weight reduction is achieved while the rigidity and the toughness of the side cover 50 are ensured over a wide range along the longitudinal direction.

Thus, while the rigidity and the toughness required for the side cover 50 are ensured, further weight reduction is promoted by reducing the thicknesses of the first resin layer 62 and the second resin layer 61.

It is preferable that the second resin layer 61 is made of resin with a crystalline structure and the degree of crystallinity of the second resin layer 61 is lower than that of the first resin layer 62. It is possible to adjust Young's modulus by changing the degree of crystallinity. The above adjustment is easier when the first resin layer 62 and the second resin layer 61 integrally molded into the layered structure are made of the same type of resin. Thus, while the rigidity and the toughness required for the side cover 50 are ensured, further weight reduction is promoted by reducing the thicknesses of the first resin layer 62 and the second resin layer 61.

Further, when both of the first resin layer 62 and the second resin layer 61 which are integrally molded into the layered structure are made of polypropylene, the cost of the side cover 50 is reduced. Furthermore, when both of the first resin layer 62 and the second resin layer 61 which are integrally molded into the layered structure are made of polyamide, the heat resistance property of the side cover 50 is improved.

According to the side cover 50 of this embodiment, each of the cover main body 51 and the bending portions 54 is formed of the second resin layer 61 and the first resin layer 62 layered on top of and integrally molded with each other. The first resin layer 62 has the Young's modulus higher than and the thickness smaller than those of the second resin layer 61. The first resin layer 62 is made of crystalline resin, and has the Young's modulus higher than that of the second resin layer 61. Therefore, the thickness of the first resin layer 62 which is required to provide a given degree of rigidity is smaller than that of the second resin layer 61 which is required to provide the given degree of rigidity. Both the first resin layer 62 and the second resin layer 61 are made of polypropylene, and both have the same specific gravity. A part of the second resin layer 61 is replaced by the first resin layer 62 having the Young's modulus higher than that of the second resin layer 61. This makes it possible to enhance the rigidity while reducing the increase in weight. In other words, it is possible to promote weight reduction while ensuring the rigidity. Since the thickness of the first resin layer which is required to provide a given degree of rigidity is smaller than that of the second resin layer which is required to provide the given degree of rigidity, even if the specific gravity of the first resin layer is larger than the specific gravity of the second resin layer, there may be a case where the weight of the first resin layer which is required to provide the given degree of rigidity is smaller than that of the second resin layer which is required to provide the given degree of rigidity due to the smaller thickness of the first resin layer. For this reason, the specific gravity of the first resin layer may be but does not have to be equal to or lower than the specific gravity of the second resin layer.

The first resin layer 62 has the Young's modulus higher than that of the second resin layer 61. Meanwhile, the second resin layer 61 does not require any process for enhancing the Young's modulus. Thus, the cost of the second resin layer 61 is reduced as compared to the first resin layer 62. It is expected that an increase in the ratio of the first resin layer 62 leads to enhancement of the rigidity of the side cover 50; however, it may cause an increase in cost. In the side cover 50 of this embodiment, the second resin layer 61 is thicker than the first resin layer 62. With this, the rigidity is improved without a large increase in cost.

The side cover 50 includes the integral layered resin portion 63 formed of the first resin layer 62 and the second resin layer 61. The first resin layer 62 and the second resin layer 61 are integrally molded, and therefore the first resin layer 62 and the second resin layer 61 do not separate from each other. Accordingly, there is no possibility that the rigidity of the side cover 50 is reduced due to the inclusion of the integral layered resin portion 63.

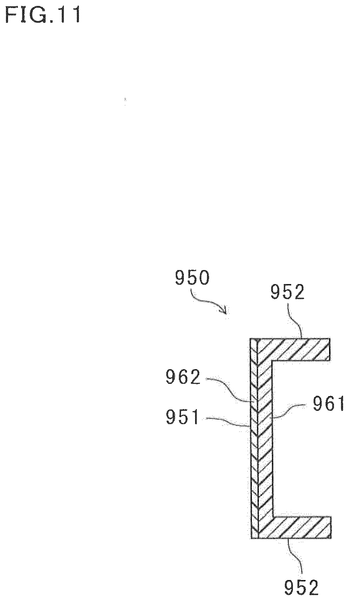

A side cover 950 as shown in FIG. 11 may be conceivable. In the side cover 950, only a cover main body 951 is formed by a member formed of a first resin layer 962 and a second resin layer 961 that are layered on top of and integrally molded with each other. Meanwhile, each edge wall portion 952 of the side cover 950 is formed only by the second resin layer 961. The first resin layer 962 and the second resin layer 961 respectively have the structures similar to those of the first resin layer 62 and the second resin layer 61 in this embodiment, in terms of material, thickness, and the like. According to the side cover 50 of this embodiment, in one cross-section of the side cover 50, the integral layered resin portion 63 formed of the first resin layer 62 and the second resin layer 61 forms: the cover main body (the cover main body 51, the upper cover main body 51U, or the lower cover main body 51D); and the bending portions 54 and the edge wall portions 52 on both sides of the cover main body. The longitudinal direction of the side cover 50 corresponds to the forward/rearward direction. Therefore, bending deformation in the right/left direction, that is, bending deformation around a vertical line V (see a reference sign "A" in FIG. 4) tends to occur during driving. In addition, torsional deformation around a horizontal axis H extending in the forward/rearward direction (see a reference sign "B" in FIG. 4) also tends to occur during driving. To suppress these deformations, it is effective to increase the second moment of area of a cross-section of the side cover 50 cut in a direction crossing the exterior surface. In any cross-section of the side cover 50 crossing the exterior surface, the cover main body 51 is substantially flat. Meanwhile in a cross-section of the side cover 50 crossing the exterior surface, a portion constituted by: the cover main body (the cover main body 51, the upper cover main body 51U, or the lower cover main body 51D); and the bending portions 54 and edge wall portions 52 which are located on both respective sides of the cover main body is formed substantially into a C-shape. Because of this, the second moment of area of this portion is higher than that of the cover main body. In this embodiment, ingenuity is exercised not only in terms of structure, but also in terms of shape. In terms of structure, the integral layered resin portion 63 formed of the first resin layer 62 and the second resin layer 61 is included. In terms of shape, the second moment of area of a cross-section of the side cover 50 cut in a direction crossing the exterior surface is increased by the shape of the integral layered resin portion 63. This makes it possible to enhance the rigidity while reducing the increase in weight. According to the side cover 50 of this embodiment, the above advantageous effects are organically combined, thereby to simultaneously achieve ensured rigidity and weight reduction at a high level.

The angle formed by the bending portion 54 is not limited to any particular angle; however, in terms of compatibility in shape to function as the side cover 50 for a straddled vehicle and in terms of enhancement of rigidity, the angle is preferably equal to or smaller than 150 degrees, and more preferably equal to or smaller than 135 degrees.

In the situation that the side cover 50 is supported by the vehicle body frame 2, the cover main body 51 is positioned laterally to the vehicle body frame 2. Further, the bending portion 54 and the edge wall portion 52 are located on the upper and lower sides of the cover main body (the cover main body 51, the upper cover main body 51U, or the lower cover main body 51D). The above-described arrangement preferably suppresses the bending deformation in the right/left direction and the torsional deformation about the horizontal axis during driving. Further, in this embodiment, each of the bending portion 54 and the edge wall portion 52 is formed on the entire perimeter of the cover main body 51. This makes it possible to simultaneously achieve ensured rigidity and weight reduction at an even higher level.

The cover main body 51 may be formed into a straight flat shape; however, the cover main body 51 is formed to bulge toward the obverse in this embodiment. This further suppresses the bending deformation and the torsional deformation of the cover main body 51 so as to further improve the rigidity of the cover main body 51.

### (Second Embodiment)

In the side cover 50 of the first embodiment, the first resin layer 62 is on the obverse side of the second resin layer 61 and forms the exterior surface of the side cover 50. In other words, the position of the first resin layer 62 relative to the second resin layer 61 corresponds to the position of the edge wall portion 52 relative to the cover main body 51. However, the position of the first resin layer 62 relative to the second resin layer 61 is not limited to any particular position.

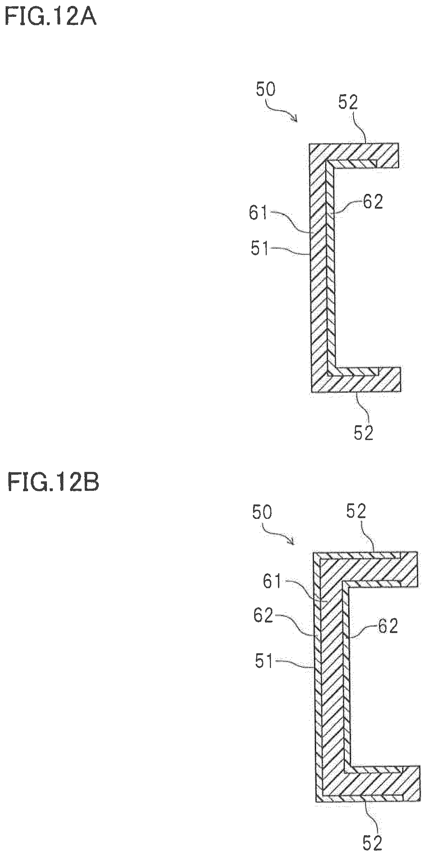

As shown in FIG. 12A, the first resin layer 62 may be on the reverse side of the second resin layer 61. That is, the position of the first resin layer 62 relative to the second resin layer 61 may correspond to the position of the edge wall portion 52 relative to the cover main body 51. Alternatively, as shown in FIG. 12B, the first resin layer 62 may be provided on each of the obverse and reverse sides of the second resin layer 61.

### (Third Embodiment)

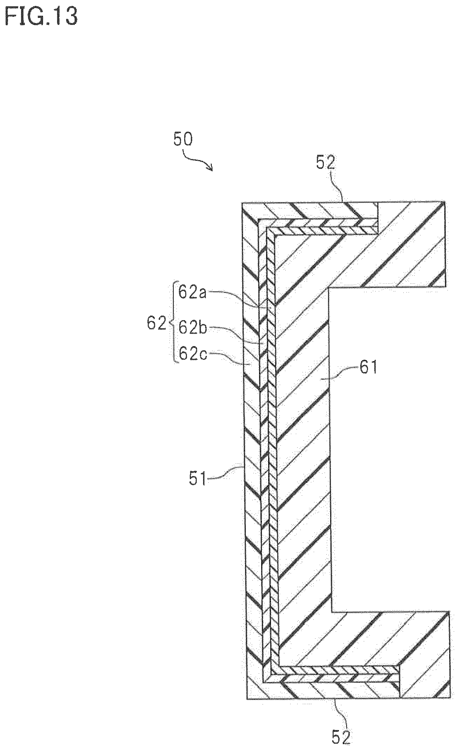

In the side cover 50 of the first embodiment, each of the first resin layer 62 and the second resin layer 61 is a single layer. However, the second resin layer 61 and/or the first resin layer 62 may have a multi-layer structure. For example, as shown in FIG. 13, the first resin layer 62 may have a multi-layer structure while the second resin layer 61 is a single layer.

In the embodiment shown in FIG. 13, the first resin layer 62 includes: a binder layer 62a; a colored layer 62b; and a transparent layer 62c. The binder layer 62a enhances adhesion to the second resin layer 61. The colored layer 62b is layered on top of the binder layer 62a. The transparent layer 62c is layered on top of the colored layer 62b. The colored layer 62b includes a character, a figure, a color, a pattern, or a combination thereof, and has a function of decorating the side cover 50. Note that the color of the colored layer 62b may be or may include white. The transparent layer 62c is transparent, and has a function of protecting the colored layer 62b. The colored layer 62b is visible through the transparent layer 62c. This structure eliminates the necessity to paint a surface of the side cover 50 to decorate the side cover 50, or to attach a decorative sticker to the side cover 50. In this embodiment, painting or a sticker is not needed. Thus, further weight reduction is possible in the side cover 50 which needs decoration.

The side cover 50 of this embodiment is produced, for example, in the following manner. First, printing is performed using ink on a surface of a transparent resin film (e.g., polypropylene film) constituting the transparent layer 62c, so that the ink forms the colored layer 62b on the transparent layer 62c. Then, a binder is applied to a surface of the colored layer 62b, thereby to form the binder layer 62a on the colored layer 62b. Thus, a sheet of the first resin layer 62 having a three-layer structure is obtained. Then, the sheet of the first resin layer 62 is disposed in a mold, with the transparent layer 62c being in contact with the inner wall surface of the mold. Thereafter, a material for the second resin layer 61 is injected into the mold. As a result, the side cover 50 in which the first resin layer 62 having the multi-layer structure and the second resin layer 61 are integrally molded in a layered manner is obtained. As described above, the side cover 50 of this embodiment is produced by film insertion molding, for example. It should be noted that the method of producing the side cover 50 of this embodiment is not limited to film insertion molding, and another producing method may be adopted.

### (Other Embodiments)

Each of the above-described embodiments is merely an example of various embodiments of the present teaching. It is a matter of course that other embodiments are possible for the present teaching.

Through the side cover 50 of the first embodiment, there are formed the holes 41A, 41B, and 41C, into each of which the fastening member 59 such as a bolt is to be inserted. The holes 41A, 41B, and 41C are attachment holes used to attach the side cover 50 to the vehicle body frame 2. However, a hole formed on/through the side cover 50 is not limited to such attachment holes. The side cover 50 may have, for example, a hole through which air passes as the motorcycle 1 is driven, or may have a decorative hole.

In the above-described embodiment, the bending portion 54 (and the edge wall portion 52) is formed on the entire perimeter of cover main body 51; however, the bending portion may be formed partially on the perimeter of the cover main body. The foregoing is provided, however, in that in at least one cross-section of the side cover 50 crossing the exterior surface, the integral layered resin portion 63 shall form: the cover main body (the cover main body 51, the upper cover main body 51U, or the lower cover main body 51D); and the two bending portions 54 formed at both end portions of the cover main body. In addition, it is preferable that this cross-section of the side cover 50 crosses the longitudinal direction of the side cover 50, and that each bending portion 54 extends in the longitudinal direction of the side cover 50.

In the above-described embodiment, the cover main body 51 is formed into the curved shape bulging toward the obverse in at least one cross-section of the side cover 50 crossing the exterior surface; however, the shape of the cover main body 51 is not limited to this. The whole cover main body 51 may be formed to be substantially flat. Alternatively, in at least one cross-section of the side cover 50 crossing the exterior surface, the cover main body (the cover main body 51, the upper cover main body 51U, or the lower cover main body 51D) may be formed into a curved shape recessed relative to a virtual straight line. The virtual straight line is the line connecting the two bending portions 54 formed at both end portions of the cover main body.

In the above-described embodiment, each of the protruding portions 53A, 53B, 53C, and 53D is formed into the tubular shape; however, the protruding portion of the present teaching does not have to have the tubular shape. Further, in the above-described embodiment, all the protruding portions 53A, 53B, 53C, and 53D protrude from the reverse surface of the cover main body 51; however, the exterior cover of the present teaching may include one or more protruding portions protruding from the exterior surface.

In the above-described embodiment, the exterior cover for a straddled vehicle of the present teaching is applied to the front side covers 50; however, the exterior cover for a straddled vehicle of the present teaching may be applied to any of the rear side covers 12, the front fender 13, and the rear fender 14. In addition, the exterior cover of the present teaching may be for a straddled vehicle other than the motorcycle 1.

The present teaching does not rely on the generally-proposed technical ideas stating that the toughness and the rigidity are ensured by increasing the thickness, by providing a rib for reinforcement, or by joining exterior covers to each other with the covers overlapping each other. However, by combining the exterior cover of the present teaching with one or more of the generally-proposed technical ideas, it is possible to promote further weight reduction while ensuring the toughness and the rigidity. The present teaching may be combined with one or more other technical ideas which include the generally-proposed technical ideas stating that the toughness and the rigidity are ensured by increasing the thickness, by providing a rib for reinforcement, or by joining exterior covers to each other with the covers overlapping each other.

The terms and expressions used herein are used only for explanatory purposes and are not used for limited interpretation of the present disclosure. It should be understood that none of the equivalents to the features expressed and described herein are excluded, and that the present teaching allows various designchanges falling within the scope of the claims.

The present teaching can be embodied in many different forms. The present disclosure is to be considered as providing embodiments of the principles of the present teaching. A number of illustrative embodiments are described herein with the understanding that such embodiments and modifications are not intended to limit the present teaching to preferred embodiments described herein and/or illustrated in the drawings.

The present teaching encompasses any and all embodiments including equivalent elements, modifications, omissions, combinations (e.g., of features across various embodiments), adaptations and/or alterations which can be appreciated by those in the art on the basis of the present disclosure. The limitations in the claims are to be interpreted broadly on the basis of the language used in the claims and are not limited to the embodiments described herein or during the prosecution of the application. Such embodiments are to be construed as non-exclusive. For example, the term "preferably" or "preferable" herein is non-exclusive and means "preferably/preferable, but not limited to."

### Reference Signs List

- 1: motorcycle (straddled vehicle)
- 50: side cover
- 51: cover main body
- 51U: upper cover main body (cover main body)
- 51U: lower cover main body (cover main body)
- 52, 52U, 52D: edge wall portion
- 53A, 53B, 53C, 53D: protruding portion
- 54, 54U, 54D, 56a, 56b, 57a, 57b, 57c: bending portion
- 61: second resin layer
- 62: first resin layer
- 63: integral layered resin portion

## Claims

1. An exterior cover for a straddled vehicle in which a seat is supported by a vehicle body frame, the exterior cover including an exterior surface and being configured to be supported by the vehicle body frame, the exterior cover comprising
an integral layered resin portion formed of a first resin layer and a second resin layer layered on and integrally molded with each other, the first resin layer made of resin with a crystalline structure being thinner than the second resin layer made of resin having a Young's modulus lower than that of the first resin layer, wherein
in a first cross-section of the exterior cover cut in a first direction crossing the exterior surface,
the integral layered resin portion formed of the first resin layer and the second resin layer which are integrally molded into a layered structure forms:
a cover main body on which the exterior surface is formed; and
two first bending portions respectively formed into bent shapes at both end portions of the cover main body.

2. The exterior cover according to claim 1, wherein in the first cross-section of the exterior cover,
the integral layered resin portion formed of the first resin layer and the second resin layer which are integrally molded into the layered structure forms two first edge wall portions which are respectively in continuity with both end portions of the cover main body via the respective first bending portions, and the first edge wall portions extend from the respective both end portions of the cover main body in one direction along the first direction crossing the exterior surface.

3. The exterior cover according to claim 1 or 2, wherein in the first cross-section of the exterior cover,
the cover main body formed by the integral layered resin portion formed of the first resin layer and the second resin layer which are integrally molded into the layered structure is formed into a curved shape bulging or recessed relative to a virtual straight line connecting the two first bending portions.

4. The exterior cover according to claim 3, wherein in the first cross-section of the exterior cover,
a width of the cover main body formed by the integral layered resin portion formed of the first resin layer and the second resin layer which are integrally molded into the layered structure is longer than a length of each of two first edge wall portions which are respectively in continuity with the both end portions of the cover main body via the respective first bending portions.

5. The exterior cover according to any one of claims 1 to 4, wherein in the first cross-section of the exterior cover,
bending angles of the two first bending portions provided at the both end portions of the cover main body formed by the integral layered resin portion formed of the first resin layer and the second resin layer which are integrally molded into the layered structure are different from each other.

6. The exterior cover according to any one of claims 1 to 5, wherein in the first cross-section of the exterior cover,
the integral layered resin portion formed of the first resin layer and the second resin layer which are integrally molded into the layered structure forms two first edge wall portions which are respectively in continuity with the both end portions of the cover main body via the respective first bending portions, and lengths of the two first edge wall portions are different from each other.

7. The exterior cover according to any one of claims 1 to 6, wherein in a second cross-section of the exterior cover which is orthogonal to the first cross-section of the exterior cover and crosses the exterior surface,
the integral layered resin portion formed of the first resin layer and the second resin layer which are integrally molded into the layered structure forms:
the cover main body; and
two second bending portions respectively formed into bent shapes at both end portions of the cover main body.

8. The exterior cover according to any one of claims 1 to 7, wherein
a protruding portion which is in continuity with the cover main body via a bending portion is formed between the both end portions of the cover main body, and
in a cross-section of the exterior cover passing through the protruding portion and crossing the exterior surface,
the integral layered resin portion formed of the first resin layer and the second resin layer which are integrally molded into the layered structure forms:
the cover main body; and
at least a part of the protruding portion.

9. The exterior cover according to claim 8, wherein the protruding portion formed by the integral layered resin portion formed of the first resin layer and the second resin layer which are integrally molded into the layered structure is formed into a tubular shape.

10. The exterior cover according to claim 2, wherein:
a longitudinal direction of the exterior cover is orthogonal to the first cross-section of the exterior cover; and
the first edge wall portions formed by the integral layered resin portion formed of the first resin layer and the second resin layer which are integrally molded into the layered structure extend in the longitudinal direction of the exterior cover.

11. The exterior cover according to any one of claims 1 to 10, wherein the second resin layer integrally molded with the first resin layer into the layered structure is made of resin with a crystalline structure, and the degree of crystallinity of the second resin layer is lower than that of the first resin layer.

12. The exterior cover according to claim 11, wherein both of the first resin layer and the second resin layer integrally molded into the layered structure are made of polypropylene or polyamide.

## Patentansprüche

1. Eine Außenabdeckung für ein im Grätschsitz zu fahrendes Fahrzeug, bei dem ein Sitz durch einen Fahrzeugkarosserierahmen getragen wird, wobei die Außenabdeckung eine Außenoberfläche umfasst und dazu konfiguriert ist, von dem Fahrzeugkarosserierahmen getragen zu werden, wobei die Außenabdeckung folgende Merkmale aufweist:
einen einstückigen geschichteten Harzabschnitt, der aus einer ersten Harzschicht und einer zweiten Harzschicht gebildet ist, die aufeinander geschichtet und einstückig miteinander geformt sind, wobei die erste Harzschicht, die aus einem Harz mit einer kristallinen Struktur hergestellt ist, dünner ist als die zweite Harzschicht, die aus einem Harz hergestellt ist, dessen Young'scher Modul geringer ist als der der ersten Harzschicht, wobei
bei einem ersten Querschnitt der Außenabdeckung, der in einer ersten Richtung geschnitten ist, die die Außenoberfläche kreuzt,
der einstückige geschichtete Harzabschnitt, der aus der ersten Harzschicht und der zweiten Harzschicht gebildet ist, die einstückig zu einer geschichteten Struktur geformt sind, Folgendes bildet:
einen Abdeckungshauptkörper, an dem die Außenoberfläche gebildet ist; und
zwei erste Biegeabschnitte, die jeweils an einem der beiden Endabschnitte des Abdeckungshauptkörpers zu gebogenen Formen gebildet sind.

2. Die Außenabdeckung gemäß Anspruch 1, bei der bei dem ersten Querschnitt der Außenabdeckung
der einstückige geschichtete Harzabschnitt, der aus der ersten Harzschicht und der zweiten Harzschicht gebildet ist, die einstückig zu der geschichteten Struktur geformt sind, zwei erste Kantenwandabschnitte bildet, die über die jeweiligen ersten Biegeabschnitte jeweils eine Fortsetzung beider Endabschnitte des Abdeckungshauptkörpers bilden, und sich die ersten Kantenwandabschnitte von den jeweiligen beiden Endabschnitten des Abdeckungshauptkörpers in einer Richtung entlang der ersten Richtung, die die Außenoberfläche kreuzt, erstrecken.

3. Die Außenabdeckung gemäß Anspruch 1 oder 2, bei der bei dem ersten Querschnitt der Außenabdeckung
der Abdeckungshauptkörper, der durch den einstückigen geschichteten Harzabschnitt gebildet ist, der aus der ersten Harzschicht und der zweiten Harzschicht gebildet ist, die einstückig zu der geschichteten Struktur geformt sind, zu einer gekrümmten Form gebildet ist, die relativ zu einer virtuellen Geraden, die die zweiten ersten Biegeabschnitte miteinander verbindet, vorgewölbt oder ausgekehlt ist.

4. Die Außenabdeckung gemäß Anspruch 3, bei der bei dem ersten Querschnitt der Außenabdeckung
eine Breite des Abdeckungshauptkörpers, der durch den einstückigen geschichteten Harzabschnitt gebildet ist, der aus der ersten Harzschicht und der zweiten Harzschicht gebildet ist, die einstückig zu der geschichteten Struktur geformt sind, länger ist als eine Länge jedes der zwei ersten Kantenwandabschnitte, die über die jeweiligen ersten Biegeabschnitte jeweils eine Fortsetzung beider Endabschnitte des Abdeckungshauptkörpers bilden.

5. Die Außenabdeckung gemäß einem der Ansprüche 1 bis 4, bei der sich bei dem ersten Querschnitt der Außenabdeckung
Biegewinkel der zwei ersten Biegeabschnitte, die an den beiden Endabschnitten des Abdeckungshauptkörpers vorgesehen sind, der durch den einstückigen geschichteten Harzabschnitt gebildet ist, der aus der ersten Harzschicht und der zweiten Harzschicht gebildet ist, die einstückig zu der geschichteten Struktur geformt sind, voneinander unterscheiden.

6. Die Außenabdeckung gemäß einem der Ansprüche 1 bis 5, bei der sich bei dem ersten Querschnitt der Außenabdeckung
der einstückige geschichtete Harzabschnitt, der aus der ersten Harzschicht und der zweiten Harzschicht gebildet ist, die einstückig zu der geschichteten Struktur geformt sind, zwei erste Kantenwandabschnitte bildet, die über die jeweiligen ersten Biegeabschnitte jeweils eine Fortsetzung beider Endabschnitte des Abdeckungshauptkörpers bilden, und sich die Längen der zwei ersten Kantenwandabschnitte voneinander unterscheiden.

7. Die Außenabdeckung gemäß einem der Ansprüche 1 bis 6, bei der bei einem zweiten Querschnitt der Außenabdeckung, der orthogonal zu dem ersten Querschnitt der Außenabdeckung ist und die Außenoberfläche kreuzt,
der einstückige geschichtete Harzabschnitt, der aus der ersten Harzschicht und der zweiten Harzschicht gebildet ist, die einstückig zu der geschichteten Struktur geformt sind, Folgendes bildet:
den Abdeckungshauptkörper; und
zwei zweite Biegeabschnitte, die jeweils an einem der beiden Endabschnitte des Abdeckungshauptkörpers zu einer gebogenen Form gebildet sind.

8. Die Außenabdeckung gemäß einem der Ansprüche 1 bis 7, bei der
ein vorstehender Abschnitt, der über einen Biegeabschnitt eine Fortsetzung des Abdeckungshauptkörpers bildet, zwischen den beiden Endabschnitten des Abdeckungshauptkörpers gebildet ist, und
bei einem Querschnitt der Außenabdeckung, der durch den vorstehenden Abschnitt verläuft und die Außenoberfläche kreuzt,
der einstückige geschichtete Harzabschnitt, der aus der ersten Harzschicht und der zweiten Harzschicht gebildet ist, die einstückig zu der geschichteten Struktur geformt sind, Folgendes bildet:
den Abdeckungshauptkörper; und
zumindest einen Teil des vorstehenden Abschnitts.

9. Die Außenabdeckung gemäß Anspruch 8, bei der der vorstehende Abschnitt, der durch den einstückigen geschichteten Harzabschnitt gebildet ist, der aus der ersten Harzschicht und der zweiten Harzschicht gebildet ist, die einstückig zu der geschichteten Struktur geformt sind, zu einer Röhrenform gebildet ist.

10. Die Außenabdeckung gemäß Anspruch 2, bei der:
eine Längsrichtung der Außenabdeckung orthogonal zu dem ersten Querschnitt der Außenabdeckung ist; und
sich die ersten Kantenwandabschnitte, die durch den einstückigen geschichteten Harzabschnitt gebildet sind, der aus der ersten Harzschicht und der zweiten Harzschicht gebildet ist, die einstückig zu der geschichteten Struktur geformt sind, in der Längsrichtung der Außenabdeckung erstrecken.

11. Die Außenabdeckung gemäß einem der Ansprüche 1 bis 10, bei der die zweite Harzschicht, die mit der ersten Harzschicht einstückig zu der geschichteten Struktur geformt ist, aus Harz mit einer kristallinen Struktur hergestellt ist und der Grad der Kristallinität der zweiten Harzschicht niedriger ist als der der ersten Harzschicht.

12. Die Außenabdeckung gemäß Anspruch 11, bei der sowohl die erste Harzschicht als auch die zweite Harzschicht, die einstückig zu der geschichteten Struktur geformt sind, aus Polypropylen oder Polyamid herstellt sind.

## Revendications

1. Habillage extérieur pour un véhicule à selle dans lequel un siège est supporté par un châssis de carrosserie de véhicule, l'habillage extérieur comportant une surface extérieure et étant configuré pour être supporté par le châssis de carrosserie de véhicule, l'habillage extérieur comprenant
une partie de résine en couches solidaires formée d'une première couche de résine et d'une deuxième couche de résine disposées en couches l'une sur l'autre et moulées de manière solidaire l'une avec l'autre, la première couche de résine étant réalisée en résine à structure cristalline plus mince que la deuxième couche de résine réalisée en résine présentant un module de Young inférieur à celui de la première couche de résine,
dans lequel
dans une première section de l'habillage extérieur, coupée dans une première direction à travers la surface extérieure,
la partie de résine en couches solidaires formée de la première couche de résine et de la deuxième couche de résine, qui sont moulées de manière solidaire pour obtenir une structure en couches, forme:
un corps principal d'habillage sur lequel est formée la surface extérieure; et
deux premières parties flexibles formées respectivement selon des formes courbées aux deux parties d'extrémité du corps principal de l'habillage.

2. Habillage extérieur selon la revendication 1, dans lequel, dans la première section de l'habillage extérieur,
la partie de résine en couches solidaires formée de la première couche de résine et de la deuxième couche de résine, qui sont moulées de manière solidaire pour obtenir la structure en couches, forme deux premières parties de paroi de bord qui se trouvent respectivement en continuité avec les deux parties d'extrémité du corps principal de l'habillage par l'intermédiaire des premières parties flexibles respectives, et les premières parties de paroi de bord s'étendent à partir des deux parties d'extrémité respectives du corps principal de l'habillage dans une seule direction le long de la première direction passant à travers la surface extérieure.

3. Habillage extérieur selon la revendication 1 ou 2, dans lequel, dans la première section de l'habillage extérieur,
le corps principal de l'habillage formé par la partie de résine en couches solidaires formée de la première couche de résine et de la deuxième couche de résine, qui sont moulées de manière solidaire pour obtenir la structure en couches, est formé de forme courbée bombée ou en creux par rapport à une ligne droite virtuelle connectant les deux premières parties flexibles.

4. Habillage extérieur selon la revendication 3, dans lequel, dans la première section de l'habillage extérieur,
une largeur du corps principal de l'habillage formé par la partie de résine en couches solidaires formée de la première couche de résine et de la deuxième couche de résine, qui sont moulées de manière solidaire pour obtenir la structure en couches, est plus grande qu'une longueur de chacune des deux parties de paroi de bord qui se trouvent respectivement en continuité avec les deux parties d'extrémité du corps principal de l'habillage par l'intermédiaire des premières parties flexibles respectives.

5. Habillage extérieur selon l'une quelconque des revendications 1 à 4, dans lequel, dans la première section de l'habillage extérieur,
les angles de flexion des deux premières parties de flexion prévues aux deux parties d'extrémité du corps principal de l'habillage formé par la partie de résine en couches solidaires formée de la première couche de résine et de la deuxième couche de résine, qui sont moulées de manière solidaire pour obtenir la structure en couches, sont différents l'un de l'autre.

6. Habillage extérieur selon l'une quelconque des revendications 1 à 5, dans lequel, dans la première section de l'habillage extérieur,
la partie de résine en couches solidaires formée de la première couche de résine et de la deuxième couche de résine, qui sont moulées de manière solidaire pour obtenir la structure en couches, forme deux premières parties de paroi de bord qui se trouvent respectivement en continuité avec les deux parties d'extrémité du corps principal de l'habillage par l'intermédiaire des premières parties flexibles, et les longueurs des deux premières parties de paroi de bord sont différentes l'une de l'autre.

7. Habillage extérieur selon l'une quelconque des revendications 1 à 6, dans lequel, dans une deuxième section de l'habillage extérieur qui est orthogonal à la première section de l'habillage extérieur et passe à travers la surface extérieure,
la partie de résine en couches solidaires formée de la première couche de résine et de la deuxième couche de résine, qui sont moulées de manière solidaire pour obtenir la structure en couches, forme:
le corps principal de l'habillage; et
deux deuxièmes parties flexibles formées respectivement selon des formes courbées aux deux parties d'extrémité du corps principal de l'habillage.

8. Habillage extérieur selon l'une quelconque des revendications 1 à 7, dans lequel
une partie en saillie, qui se trouve en continuité avec le corps principal de l'habillage par l'intermédiaire d'une partie flexible, est formée entre les deux parties d'extrémité du corps principal de l'habillage, et
dans une section de l'habillage extérieur passant à travers la partie saillante et à travers la surface extérieure,
la partie de résine en couches solidaires formée de la première couche de résine et de la deuxième couche de résine, qui sont moulées de manière solidaire pour obtenir la structure en couches, forme:
le corps principal de l'habillage; et
au moins une portion de la partie en saillie.

9. Habillage extérieur selon la revendication 8, dans lequel la partie en saillie formée par la partie de résine en couches solidaires formée de la première couche de résine et de la deuxième couche de résine, qui sont moulées de manière solidaire pour obtenir la structure en couches, est formée selon une forme tubulaire.

10. Habillage extérieur selon la revendication 2, dans lequel:
une direction longitudinale de l'habillage extérieur est orthogonale à la première section de l'habillage extérieur; et
les premières parties de paroi de bord formées par la partie de résine en couches solidaires formée de la première couche de résine et de la deuxième couche de résine, qui sont moulées de manière solidaire pour obtenir la structure en couches, s'étendent dans la direction longitudinale de l'habillage extérieur.

11. Habillage extérieur selon l'une quelconque des revendications 1 à 10, dans lequel la deuxième couche de résine moulée de manière solidaire avec la première couche de résine pour obtenir la structure en couches est réalisée en résine à structure cristalline, et le degré de cristallinité de la deuxième couche de résine est inférieur à celui de la première couche de résine.

12. Habillage extérieur selon la revendication 11, dans lequel tant la première couche de résine que la deuxième couche de résine moulées de manière solidaire pour obtenir la structure en couches sont réalisées en polypropylène ou en polyamide.
